# EUROPEAN PATENT APPLICATION

(11) **EP 4 164 148 A1**
(43) Date of publication of application: **12.04.2023**
(21) Application number: 21831553.9
(22) Date of filing: 21.06.2021

(54) **MESSAGE PROCESSING METHOD, UP DEVICE AND CP DEVICE**

(30) Priority: 28.06.2020 CN 202010598522
(71) Applicant: Huawei Technologies Co., Ltd., Longgang District, Shenzhen, Guangdong 518129 (CN)
(72) Inventor: NIU, Chengguang, Shenzhen, Guangdong 518129 (CN); YU, Zhouyi, Shenzhen, Guangdong 518129 (CN); GUO, Hongtao, Shenzhen, Guangdong 518129 (CN)
(74) Representative: Huawei European IPR
(86) International application number: PCT/CN2021/101332
(87) International publication number: WO 2022/001735

(57) **Abstract**

This application provides a packet processing method, a UP device, and a CP device, and belongs to the field of communication technologies, to prevent a CP device from being attacked in a scenario in which a BNG with CU disaggregated performs access authentication. In the method, when receiving a packet, a UP device matches information in the packet with information about a user having a fixed IP address. If the matching succeeds, the UP device sends the packet to a CP device. Because a task of checking whether the packet comes from the user having the fixed IP address is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the user having the fixed IP address, a risk that the CP device is attacked by the malicious IP packet flow is reduced.

## Description

This application claims priority to Chinese Patent Application No. 202010598522.1, filed on June 28, 2020 and entitled "PACKET PROCESSING METHOD, UP DEVICE, AND CP DEVICE", which is incorporated herein by reference in its entirety.

### TECHNICAL FIELD

This application relates to the field of communication technologies, and in particular, to a packet processing method, a UP device, and a CP device.

### BACKGROUND

A broadband network gateway (Broadband Network Gateway, BNG) is an access gateway oriented to a broadband network. When a terminal accesses a network, the BNG is responsible for authentication and Internet Protocol (Internet Protocol, IP) address assignment, to connect the terminal to the broadband network. Functions of the BNG are classified into a control plane and a forwarding plane. The control plane is configured to provide services such as access management, session management, authentication, authorization, and accounting (Authentication, Authorization, and Accounting, AAA), address assignment, and service policy control. The forwarding plane is configured to implement forwarding processing, including sending an access protocol packet to the control plane, and forwarding, to a terminal, a control packet that is sent by the control plane and that is destined to the terminal.

The BNG can use a control plane and user plane disaggregated (Control Plane and User Plane Disaggregated, CU disaggregated) architecture. When the CU disaggregated architecture is used, the control plane and the forwarding plane of the BNG are separately deployed on different devices. Specifically, the BNG with CU disaggregated includes a control plane (Control Plane, CP) device and a user plane (User Plane, UP) device. The CP device is mainly responsible for functions of the control plane, and the UP device is mainly responsible for functions of the forwarding plane.

In a scenario of access of a user having a fixed IP address, information about the user having the fixed IP address is pre-configured and stored on the CP device. When an IP packet flow triggers access, the UP device receives a packet and sends the packet to the CP device. When receiving the packet, the CP device matches information in the packet with the pre-stored user information. If the matching succeeds, the CP device authenticates the packet.

When the BNG with CU disaggregated performs access authentication in the foregoing manner, the CP device is at a high risk of being attacked by a malicious IP packet flow, affecting network security of the CP device.

### SUMMARY

Embodiments of this application provide a packet processing method, a UP device, and a CP device, to improve network security of the CP device. The technical solutions are as follows:

According to a first aspect, a packet processing method is provided. The method is applied to a UP device included in a communication system in which a control plane CP and a user plane UP are disaggregated. In the method, the UP device receives a packet; and the UP device matches first information included in the packet with information about a first type of user. The first type of user has a fixed Internet Protocol IP address. The UP device sends the packet to a CP device included in the communication system if the first information and the information about the first type of user satisfy a first matching condition.

The foregoing provides a method for preventing the CP device from being attacked in a scenario in which a BNG with CU disaggregated performs access authentication. When receiving the packet, the UP device matches the information in the packet with the information about the user having the fixed IP address, and if the matching succeeds, the UP device sends the packet to the CP device. Because a task of checking whether the packet comes from the user having the fixed IP address is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the user having the fixed IP address, a risk that the CP device is attacked by the malicious IP packet flow is reduced, and network security of the CP device is improved.

Optionally, the first type of user includes a static user.

In this optional manner, in a static user access scenario, when receiving a packet, the UP device matches information in the packet with information about the static user. If the matching succeeds, the UP device sends the packet to the CP device. Because a task of checking whether the packet comes from the static user is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the static user, a risk that the CP device is attacked by the malicious IP packet flow is reduced, and network security of the CP device is improved.

Optionally, the first type of user includes an abnormal offline user.

In this optional manner, in an abnormal offline user access scenario, after receiving a packet, the UP device matches information in the packet with information about the abnormal offline user. If the matching succeeds, the UP device sends the packet to the CP device. Because a task of checking whether the packet comes from the abnormal offline user is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the abnormal offline user, a risk that the CP device is attacked by the malicious IP packet flow is reduced, and network security of the CP device is improved.

Optionally, before that the UP device matches first information included in the packet with information about a first type of user, the method further includes: The UP device matches second information included in the packet with information about a second type of user, where the second type of user has been authenticated; and the UP device determines that the second information and the information about the second type of user do not satisfy a second matching condition.

Optionally, that the UP device sends the packet to a CP device included in the communication system if the first information and the information about the first type of user satisfy a first matching condition includes: If the first information and the information about the first type of user in packet detection information PDI satisfy the first matching condition, the UP device sends, based on a packet action PA corresponding to the PDI, the packet to the CP device included in the communication system, where the PA indicates to redirect to the CP device.

In this optional manner, the CP reuses a PFCP session processing mechanism in PFCP, uses the information about the first type of user as a match field in the PDI, and uses the redirection action as the PA performed when the PDI is hit, so that a solution of executing a security policy on a UPF is more smoothly integrated with a PFCP architecture, and use of a communication mechanism implementation solution in PFCP is facilitated, so that solution implementation complexity and configuration complexity are reduced.

Optionally, before that the UP device receives a packet, the method further includes: The UP device receives a first policy from the CP device, where the first policy indicates to redirect the packet to the CP device when the first information included in the packet and the information about the first type of user satisfy the first matching condition.

Optionally, that the UP device receives a first policy from the CP device includes: The UP device receives a first packet forwarding control protocol PFCP message from the CP device, where a packet detection rule PDR carried in the first PFCP message is the first policy, and the first PFCP message is a PFCP session establishment request.

In this optional manner, the CP reuses a PFCP session message such as the PFCP session establishment request, and reuses a mechanism of delivering a PDR by using a PFCP session in PFCP, to deliver the information about the user having the fixed IP address and the redirection action to the UP, so that a solution of executing a security policy on a UPF is more smoothly integrated with a PFCP architecture, and use of a communication mechanism implementation solution in PFCP is facilitated, so that solution implementation complexity and configuration complexity are reduced.

Optionally, that the UP device receives a first policy from the CP device includes: The UP device receives a first packet forwarding control protocol PFCP message from the CP device, where a packet detection rule PDR carried in the first PFCP message is the first policy, the first PFCP message is a PFCP session message including a first message type, and the first message type indicates to create a PFCP session for the first type of user.

In this optional manner, a PCFP message of a new message type is extended, and the CP uses the PCFP message of the new message type to deliver the information about the user having the fixed IP address and the redirection action to the UP, so that after authentication succeeds, the CP can use a PFCP session establishment request to deliver a session for the user having the fixed IP address and another user, so that complexity of processing normal terminal access by the CP is reduced.

Optionally, the first PFCP message includes an interface index, the interface index identifies an access interface on the UP device, and the access interface is an interface accessed by a terminal of the first type of user.

In this optional manner, the CP notifies the UP of the access interface of the user having the fixed IP address in a form of the interface index, so that the UP can perform access authentication by determining whether the interface accessed by the terminal matches an interface index pre-delivered by the CP. Because the interface accessed by the terminal represents a location of the terminal, a location factor is considered in an access authentication process, so that authentication security is improved.

Optionally, the interface index is carried in an IE having a first information element IE type, and the first IE type identifies that the IE includes the interface index.

In this optional manner, a new type of IE is extended to carry the interface index, so that a format of the IE in the PFCP message is reused to deliver the interface index to the UP. In this way, the solution of executing the security policy on the UPF is more smoothly integrated with the PFCP architecture, and the solution implementation complexity and the configuration complexity are reduced.

Optionally, that the UP device sends the packet to a CP device included in the communication system includes: The UP device adds a general packet radio service tunneling protocol-user plane GTP-U header to the packet, and sends the packet to which the GTP-U header is added; or the UP device adds a virtual extensible local area network Vxlan header to the packet, and sends the packet to which the Vxlan header is added.

In this optional manner, the UP includes, on a GTP-U tunnel or a Vxlan tunnel, the packet that needs to be redirected to the CP, overheads of the tunnel header are low, and scalability is good. Especially, when a Vxlan-GPE tunnel carries the packet that needs to be redirected to the CP, overheads of the Vxlan header and a CU extension header are only 14 octets, and a packet encapsulation format is simple, so that bandwidth and performance overheads occupied for CU packet transmission are reduced.

Optionally, before that the UP device receives a packet, the method further includes: The UP device receives a redirection parameter from the CP device, where the redirection parameter includes at least one of GTP-U tunnel information or Vxlan tunnel information.

In this optional manner, the CP delivers the redirection parameter to the UP, so that the UP can encapsulate the tunnel header based on the redirection parameter delivered by the CP, to redirect the packet to the CP, so as to avoid complex operations of manually configuring the redirection parameter, and reduce solution implementation complexity and configuration complexity.

Optionally, the redirection parameter is carried in an IE having a second IE type, and the second IE type identifies that the IE includes the redirection parameter.

A new type of IE is extended to carry the redirection parameter, so that a format of the IE in the PFCP message is reused to deliver the redirection parameter to the UP, so that the solution implementation complexity and the configuration complexity are reduced.

Optionally, the Vxlan tunnel information is carried in an IE having a third IE type, and the third IE type identifies that the IE includes the Vxlan tunnel information.

A new type of IE is extended to carry the Vxlan tunnel information, so that a format of the IE in the PFCP message is reused to deliver the Vxlan tunnel information to the UP, so that the solution implementation complexity and the configuration complexity are reduced.

Optionally, after that the UP device sends the packet to a CP device included in the communication system, the method further includes: The UP device receives a deletion request from the CP device; and the UP device deletes the information about the first type of user in response to the deletion request.

Optionally, the deletion request is a second PFCP message. In a scenario in which a configuration of the static user is deleted, a lease period of the abnormal offline user expires, or the like, the CP indicates the UP to clear the information about the user having the fixed IP address, so as to release, in a timely manner when the information about the user is invalid, storage space occupied on the UP by the information about the user.

Optionally, the second PFCP message is a PFCP session deletion request.

The CP reuses a PFCP session message such as the PFCP session deletion request, and reuses a PFCP session deletion mechanism in PFCP, to clear the information about the user having the fixed IP address from the UP, so that a solution of executing a security policy on a UPF is more smoothly integrated with a PFCP architecture, and use of a communication mechanism implementation solution in PFCP is facilitated, so that solution implementation complexity and configuration complexity are reduced.

Optionally, the second PFCP message is a PFCP session message including a second message type, and the second message type indicates to delete a PFCP session of the first type of user.

A PCFP message of a new message type is extended, and the CP uses the PCFP message of the new message type to indicate the UP to delete the information about the user, so that complexity of processing normal terminal access by the CP is reduced.

Optionally, after that the UP device matches first information included in the packet with information about a first type of user, the method further includes: The UP device discards the packet if the first information and the information about the first type of user do not satisfy the first matching condition.

The UP discards the packet when the information in the packet fails to match the information about the user having the fixed IP address, so that the packet that fails to be matched is not transmitted to the CP. Therefore, performance overheads and processing resource waste caused by access processing performed by the CP on the packet are avoided. Especially, when the packet is a malicious packet used to perform a network attack, because the malicious packet does not match the information about the user having the fixed IP address, the UP discards the malicious packet, so that transmission of the malicious packet is blocked at the UP, and the malicious packet does not reach the CP through the UP. Therefore, the CP is prevented from performing an access processing action on the malicious packet, and a risk that the CP is under the network attack is reduced.

According to a second aspect, a packet processing method is provided. The method is applied to a CP device included in a communication system in which a control plane CP and a user plane UP are disaggregated. In the method, the CP device sends a first policy to a user plane UP device included in the communication system, where the first policy indicates to redirect a packet to the CP device when first information included in the packet and information about a first type of user satisfy a first matching condition, and the first type of user has a fixed Internet Protocol IP address; the CP device receives the packet from the UP device; and the CP device performs access processing based on the packet.

Optionally, the first type of user includes at least one of a static user or an abnormal offline user, the static user is a user having a fixed IP address, and the abnormal offline user is a user who goes offline abnormally due to a fault in the communication system within a lease period of an IP address allocated by the communication system.

Optionally, the sending a first policy includes: sending a first packet forwarding control protocol PFCP message, where the first PFCP message carries the first policy, where
the first PFCP message is a PFCP session establishment request; or the first PFCP message is a PFCP session message including a first message type, and the first message type indicates to create a PFCP session for the first type of user.

Optionally, a general packet radio service tunneling protocol-user plane GTP-U header or a virtual extensible local area network Vxlan header is added to the packet, and before that the CP device receives the packet from the UP device, the method further includes:
the CP device sends a redirection parameter to the UP device, where the redirection parameter includes at least one of GTP-U tunnel information or Vxlan tunnel information.

Optionally, after that the CP device performs access processing based on the packet, the method includes: The CP device detects that configuration information of the first type of user is deleted or a lease period of the first type of user expires; and the CP device sends a deletion request to the UP device, where the deletion request indicates to delete the information about the first type of user.

Optionally, the deletion request is a second PFCP message, where the second PFCP message is a PFCP session deletion request; or the second PFCP message is a PFCP session message including a second message type, and the second message type indicates to delete a PFCP session of the first type of user.

Optionally, the first PFCP message includes an interface index, the interface index identifies an access interface on the UP device, and the access interface is an interface accessed by a terminal of the first type of static user or an interface accessed by a terminal of the abnormal offline user.

Optionally, the interface index is carried in a group IE having a first information element IE type, and the first IE type identifies that the IE includes the interface index.

Optionally, the redirection parameter is carried in a group IE having a second IE type, and the second IE type identifies that the IE includes the redirection parameter.

Optionally, the Vxlan tunnel information is carried in an embedded IE having a third IE type, and the third IE type identifies that the IE includes the Vxlan tunnel information.

According to a third aspect, a UP device is provided. The UP device is located in a communication system in which a UP and a CP are disaggregated, and the UP device includes:
a receiving module, configured to receive a packet;
a matching module, configured to match first information included in the packet with information about a first type of user, where the first type of user has a fixed Internet Protocol IP address; and
a sending module, configured to send the packet to a control plane CP device if the first information and the information about the first type of user satisfy a first matching condition.

Optionally, the first type of user includes at least one of a static user or an abnormal offline user.

Optionally, the matching module is further configured to match second information included in the packet with information about a second type of user, where the second type of user has been authenticated; and
the UP device further includes: a determining module, configured to determine that the second information and the information about the second type of user do not satisfy a second matching condition.

Optionally, the sending module is configured to: if the first information and the information about the first type of user in packet detection information PDI satisfy the first matching condition, send, based on a packet action PA corresponding to the PDI, the packet to the CP device, where the PA indicates to redirect to the CP device.

Optionally, the receiving module is further configured to receive a first policy from the CP device, where the first policy indicates to redirect the packet to the CP device when the first information included in the packet and the information about the first type of user satisfy the first matching condition.

Optionally, the receiving module is configured to receive a first packet forwarding control protocol PFCP message from the CP device, where a packet detection rule PDR carried in the first PFCP message is the first policy, where the first PFCP message is a PFCP session establishment request; or the first PFCP message is a PFCP session message including a first message type, and the first message type indicates to create a PFCP session for the first type of user.

Optionally, the first PFCP message includes an interface index, the interface index identifies an access interface on the UP device, and the access interface is an interface accessed by a terminal of the first type of user.

Optionally, the interface index is carried in an IE having a first information element IE type, and the first IE type identifies that the IE includes the interface index.

Optionally, the sending module is configured to: add a general packet radio service tunneling protocol-user plane GTP-U header to the packet, and send the packet to which the GTP-U header is added; or add a virtual extensible local area network Vxlan header to the packet, and send the packet to which the Vxlan header is added.

Optionally, the receiving module is further configured to receive a redirection parameter from the CP device, where the redirection parameter includes at least one of GTP-U tunnel information or Vxlan tunnel information.

Optionally, the redirection parameter is carried in an IE having a second IE type, and the second IE type identifies that the IE includes the redirection parameter.

Optionally, the Vxlan tunnel information is carried in an IE having a third IE type, and the third IE type identifies that the IE includes the Vxlan tunnel information.

Optionally, the receiving module is further configured to receive a deletion request from the CP device; and the UP device further includes: a deletion module, configured to delete the information about the first type of user in response to the deletion request.

Optionally, the deletion request is a second PFCP message, where
the second PFCP message is a PFCP session deletion request; or the second PFCP message is a PFCP session message including a second message type, and the second message type indicates to delete a PFCP session of the first type of user.

Optionally, the UP device further includes: a discarding module, configured to discard the packet if the first information and the information about the first type of user do not satisfy the first matching condition.

According to a fourth aspect, a CP device is provided. The CP device is located in a communication system in which a CP and a UP are disaggregated, and the CP device includes:
a sending module, configured to send a first policy to a user plane UP device, where the first policy indicates to redirect a packet to the CP device when first information included in the packet and information about a first type of user satisfy a first matching condition, and the first type of user has a fixed Internet Protocol IP address;
a receiving module, configured to receive the packet from the UP device; and
a processing module, configured to perform access processing based on the packet.

Optionally, the first type of user includes at least one of a static user or an abnormal offline user, the static user is a user having a fixed IP address, and the abnormal offline user is a user who goes offline abnormally due to a fault in the communication system within a lease period of an IP address allocated by the communication system.

Optionally, the sending module is configured to send a first packet forwarding control protocol PFCP message, where the first PFCP message carries the first policy, where the first PFCP message is a PFCP session establishment request; or the first PFCP message is a PFCP session message including a first message type, and the first message type indicates to create a PFCP session for the first type of user.

Optionally, a general packet radio service tunneling protocol-user plane GTP-U header or a virtual extensible local area network Vxlan header is added to the packet, and the sending module is further configured to send a redirection parameter to the UP device, where the redirection parameter includes at least one of GTP-U tunnel information or Vxlan tunnel information.

Optionally, the CP device includes: a detection module, configured to detect that configuration information of the first type of user is deleted or a lease period of the first type of user expires, where
the sending module is further configured to send a deletion request to the UP device, where the deletion request indicates to delete the information about the first type of user.

Optionally, the deletion request is a second PFCP message, where
the second PFCP message is a PFCP session deletion request; or
the second PFCP message is a PFCP session message including a second message type, and the second message type indicates to delete a PFCP session of the first type of user.

Optionally, the first PFCP message includes an interface index, the interface index identifies an access interface on the UP device, and the access interface is an interface accessed by a terminal of the first type of static user or an interface accessed by a terminal of the abnormal offline user.

Optionally, the interface index is carried in a group IE having a first information element IE type, and the first IE type identifies that the IE includes the interface index.

Optionally, the redirection parameter is carried in a group IE having a second IE type, and the second IE type identifies that the IE includes the redirection parameter.

Optionally, the Vxlan tunnel information is carried in an embedded IE having a third IE type, and the third IE type identifies that the IE includes the Vxlan tunnel information.

According to a fifth aspect, a UP device is provided. The UP device includes a processor and a communication interface. The processor is configured to execute instructions, so that the UP device performs the packet processing method provided in any one of the first aspect or the optional manners of the first aspect. The communication interface is configured to receive or send a packet. For specific details of the UP device provided in the fifth aspect, refer to any one of the first aspect or the optional manners of the first aspect. Details are not described herein again.

According to a sixth aspect, a CP device is provided. The CP device includes a processor and a communication interface. The processor is configured to execute instructions, so that the CP device performs the packet processing method provided in any one of the second aspect or the optional manners of the second aspect. The communication interface is configured to receive or send a packet. For specific details of the CP device provided in the sixth aspect, refer to any one of the second aspect or the optional manners of the second aspect. Details are not described herein again.

According to a seventh aspect, a computer-readable storage medium is provided. The storage medium stores at least one instruction. When the instruction is read by a processor, an UP device is enabled to perform the packet processing method according to any one of the first aspect or the optional manners of the first aspect.

According to an eighth aspect, a computer-readable storage medium is provided. The storage medium stores at least one instruction. When the instruction is read by a processor, a CP device is enabled to perform the packet processing method according to any one of the second aspect or the optional manners of the second aspect.

According to a ninth aspect, a computer program is provided. The computer program includes computer instructions, and the computer instructions are stored in a computer-readable storage medium. A processor of a UP device reads the computer instructions from the computer-readable storage medium, and the processor executes the computer instructions, so that the UP device performs the packet processing method provided in any one of the first aspect or the optional manners of the first aspect.

According to a tenth aspect, a computer program is provided. The computer program includes computer instructions, and the computer instructions are stored in a computer-readable storage medium. A processor of a CP device reads the computer instructions from the computer-readable storage medium, and the processor executes the computer instructions, so that the CP device performs the packet processing method provided in any one of the second aspect or the optional manners of the second aspect.

According to an eleventh aspect, a chip is provided. When the chip runs on a UP device, the UP device is enabled to perform the packet processing method provided in any one of the first aspect or the optional manners of the first aspect.

According to a twelfth aspect, a chip is provided. When the chip runs on a CP device, the CP device is enabled to perform the packet processing method provided in any one of the second aspect or the optional manners of the second aspect.

According to a thirteenth aspect, a communication system is provided. The communication system includes a UP device and a CP device. The UP device is the UP device provided in the third aspect, any optional manner of the third aspect, or the fifth aspect. The CP device is the CP device provided in the fourth aspect, any optional manner of the fourth aspect, or the sixth aspect.

According to a fourteenth aspect, this application provides a UP device. The UP device includes a main control board and an interface board. Optionally, the UP device further includes a switching board. The main control board includes a first processor and a first memory. The interface board includes a second processor, a second memory, and an interface card. The main control board and the interface board are coupled.

The first memory may be configured to store program code. The first processor is configured to invoke the program code in the first memory to perform the following operation: matching first information included in a packet with information about a first type of user, where the first type of user has a fixed IP address.

The second memory may be configured to store program code. The second processor is configured to invoke the program code in the second memory, to trigger the interface card to perform the following operation: receiving the packet; and if the first information and the information about the first type of user satisfy a first matching condition, sending the packet to a CP device.

In a possible implementation, an inter-process communication (inter-process communication, IPC) channel is established between the main control board and the interface board, and the main control board and the interface board communicate with each other through the IPC channel.

### BRIEF DESCRIPTION OF DRAWINGS

FIG. 1 is a schematic diagram of a location of a BNG in a network according to an embodiment of this application;
FIG. 2 is a schematic diagram of a protocol stack processed by a BNG according to an embodiment of this application;
FIG. 3 is a diagram of an architecture of a system including a BNG according to an embodiment of this application;
FIG. 4 is a schematic diagram depicting that an AN device accesses a BNG according to an embodiment of this application;
FIG. 5 is a diagram of an architecture of functional modules in a BNG according to an embodiment of this application;
FIG. 6 is a diagram of an architecture of functional modules in a BNG with CU disaggregated according to an embodiment of this application;
FIG. 7 is a diagram of an architecture of functional modules in a BNG with CU disaggregated according to an embodiment of this application;
FIG. 8 is a schematic diagram of a control packet redirection interface according to an embodiment of this application;
FIG. 9 is a schematic diagram of a state control interface according to an embodiment of this application;
FIG. 10 is a schematic diagram of a static user access scenario according to an embodiment of this application;
FIG. 11 is a flowchart of a method 100 for accessing a BNG by a static user according to an embodiment of this application;
FIG. 12 is a schematic diagram of an abnormal offline IPoE user access scenario according to an embodiment of this application;
FIG. 13 is a flowchart of performing access and lease renewal by an IPoE terminal by using the DHCP protocol according to an embodiment of this application;
FIG. 14 is a flowchart of a method 200 for accessing a BNG by an abnormal offline IPoE terminal according to an embodiment of this application;
FIG. 15 is a schematic diagram of a location of PFCP in a protocol stack according to an embodiment of this application;
FIG. 16 is a schematic diagram of establishing a plurality of PFCP associations between a CPF and a UPF according to an embodiment of this application;
FIG. 17 is a schematic diagram of PFCP associations and PFCP sessions according to an embodiment of this application;
FIG. 18 is a schematic flowchart of processing a packet by a UPF according to an embodiment of this application;
FIG. 19 is a schematic diagram of a PFCP session according to an embodiment of this application;
FIG. 20 is a schematic diagram of a PDR according to an embodiment of this application;
FIG. 21 is a schematic diagram of performing session processing by a UPF according to PFCP according to an embodiment of this application;
FIG. 22 is an architectural diagram of a network system 300 according to an embodiment of this application;
FIG. 23 is an architectural diagram of functional modules of a UPF and a CPF according to an embodiment of this application;
FIG. 24 is a flowchart of a packet processing method 400 according to an embodiment of this application;
FIG. 25A and FIG. 25B are a flowchart of a packet processing method 500 according to an embodiment of this application;
FIG. 26A and FIG. 26B are a flowchart of a packet processing method 600 according to an embodiment of this application;
FIG. 27A and FIG. 27B are a flowchart of a packet processing method 700 according to an embodiment of this application;
FIG. 28 is a schematic diagram of a structure of a UP device 800 according to an embodiment of this application;
FIG. 29 is a schematic diagram of a structure of a CP device 810 according to an embodiment of this application;
FIG. 30 is a schematic diagram of a structure of a device 900 according to an embodiment of this application;
FIG. 31 is a schematic diagram of a structure of a device 1000 according to an embodiment of this application; and
FIG. 32 is a schematic diagram of a structure of a communication system 1100 according to an embodiment of this application.

### DESCRIPTION OF EMBODIMENTS

To make the objectives, technical solutions, and advantages of this application clearer, the following further describes implementations of this application in detail with reference to the accompanying drawings.

The term "BNG with CU disaggregated" in embodiments of this application generally refers to a BNG whose control plane and forwarding plane are located on different devices. Optionally, a device on which the control plane is located and a device on which the forwarding plane is located are distributed at different locations. A quantity relationship between the device on which the control plane is located and the device on which the forwarding plane is located is, for example, a one-to-one relationship or a one-to-many relationship. In other words, one device on which the control plane is located may be configured to control one device on which the forwarding plane is located, or may simultaneously control a plurality of devices on which the forwarding plane is located.

In embodiments of this application, "CU disaggregated" may have different names. For example, different standards, different versions of a same standard, different vendors, and different application scenarios may have different names for "CU disaggregated". For example, the term "CU disaggregated" may also be sometimes referred to as "control and forwarding disaggregated", "forwarding-control disaggregated", "control plane and user plane disaggregated", and "control and user disaggregated".

In embodiments of this application, the "BNG with CU disaggregated" may have different names. For example, different standards, different versions of a same standard, different vendors, and different application scenarios may have different names for "BNG with CU disaggregated". For example, the term "BNG with CU disaggregated" may also be sometimes referred to as a "disaggregated BNG (Disaggregated BNG, DBNG)" system. Correspondingly, a CP device in the BNG with CU disaggregated may be referred to as a DBNG-CP, and an UP device in the BNG with CU disaggregated may be referred to as a DBNG-UP. For another example, the term "BNG with CU disaggregated" may also be sometimes referred to as a "virtual broadband network gateway (Virtual BNG, vBNG) control plane and user plane disaggregated system (Control Plane and User Plane Disaggregated System, CU system)", namely, a "vBNG CU system". Correspondingly, a CP device in the BNG with CU disaggregated may be referred to as a vBNG-CP, and an UP device in the BNG with CU disaggregated may be referred to as a vBNG-UP. For another example, the term "BNG with CU disaggregated" may also be sometimes referred to as a "virtual broadband remote access server (virtual Broadband Remote Access Server, vBRAS) CU system", namely, a "vBRAS CU system". Correspondingly, a CP device in the BNG with CU disaggregated may be referred to as a vBRAS-CP, and the UP device in the BNG with CU disaggregated may be referred to as a vBRAS-UP. In this specification, the "DBNG", the "vBNG CU system", and the "vBRAS CU system" are used interchangeably.

In embodiments of this application, "CP" may have different names. For example, different standards, different versions of a same standard, different vendors, and different application scenarios may have different names for "CP". For example, the term "CP" may also be sometimes referred to as a "CP function (CP Function, CPF)" or a "CP plane". In this specification, the "CP", the "CPF", and the "CP plane" are used interchangeably. The term "CP device" is any device that implements the CP function.

In embodiments of this application, "UP" may have different names. For example, different standards, different versions of a same standard, different vendors, and different application scenarios may have different names for "UP". For example, the term "UP" may also be sometimes referred to as a "UP function (UP Function, UPF)" or a "UP plane". In this specification, the "UP", the "UPF", and the "UP plane" are used interchangeably. The term "UP device" is any device that implements the UP function.

The following describes the BNG.

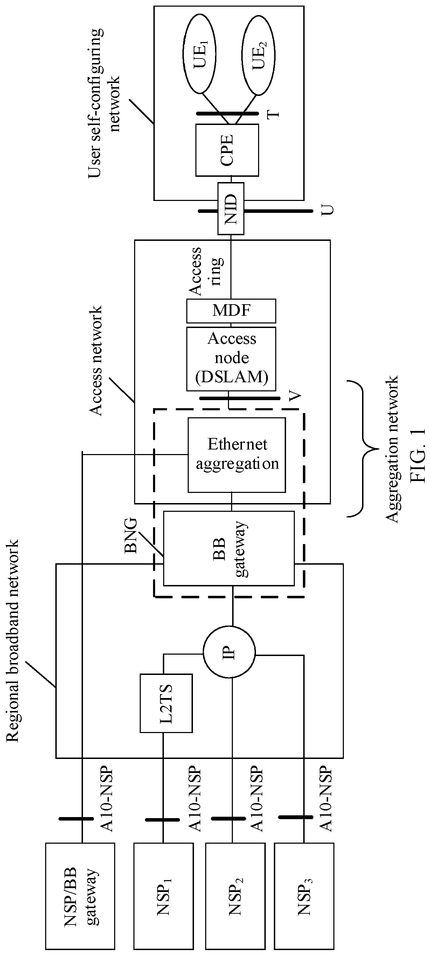

The BNG is responsible for connecting user equipment to a broadband network, and is a key device in the network. FIG. 1 is an example of a location of a BNG in a network. A BB gateway (Network Gateway) in FIG. 1 is an example of a BNG.

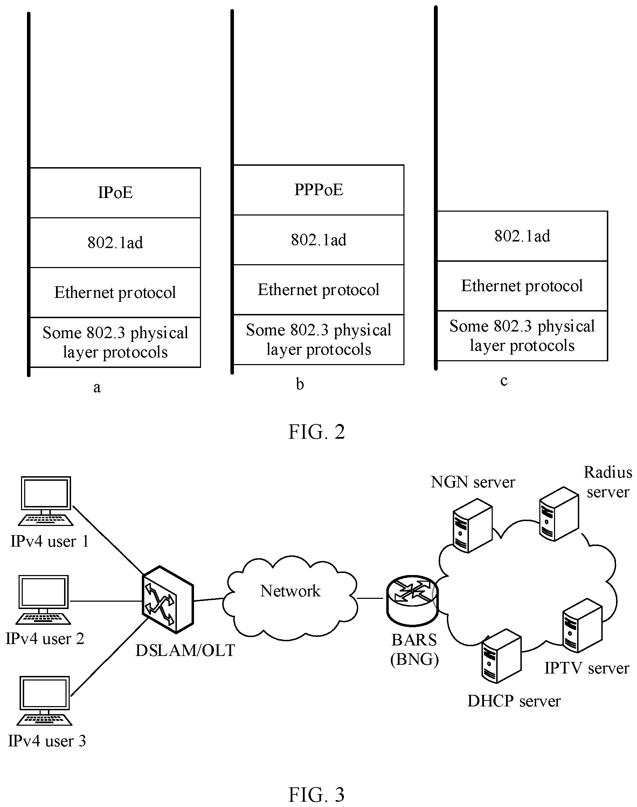

A protocol stack processed by the BNG includes but is not limited to the IP over Ethernet (Internet Protocol over Ethernet, IPoE), the Point-to-Point Protocol over Ethernet (Point-to-Point Protocol over Ethernet, PPPoE), the 802.1ad protocol, the Ethernet protocol, and some 802.3 PHY (some 802.3 Phy) protocols. For example, FIG. 2 is an example of an access-side protocol stack processed by a BNG. a, b, and c in FIG. 2 represent three parallel forms. In other words, the BNG may encapsulate a packet in a form corresponding to a protocol stack shown in any one of a, b, and c.

The BNG is mainly responsible for authentication and Internet Protocol (Internet Protocol, IP) address assignment. An authentication process is implemented based on a remote authentication dial-in user service (Remote Authentication Dial-In User Service, Radius). Specifically, the BNG serves as a Radius client (Radius client), and interacts with a Radius server (Radius Server) to complete authentication of a terminal. For example, refer to FIG. 3. A broadband remote access server (Broadband Remote Access Server, BARS) in FIG. 3 is an example of a BNG. Functions of the BARS are basically the same as those of the BNG. In FIG. 3, a terminal of an Internet Protocol version 4 (Internet Protocol version 4, IPv4) user 1, a terminal of an IPv4 user 2, and a terminal of an IPv4 user 3 are in network connection with a digital subscriber line access multiplexer (Digital Subscriber Line Access Multiplexer, DSLAM) or an optical line terminal (optical line terminal, OLT). The DSLAM/OLT is connected to the BARS. The BARS is in network connection with an NGN server, a Radius server, a dynamic host configuration protocol (Dynamic Host Configuration Protocol, DHCP) server, and an interactive personality television (IPTV) server. The BARS is configured to assign IP addresses to the terminal of the IPv4 user 1, the terminal of the IPv4 user 2, and the terminal of the IPv4 user 3, and perform authentication on the terminal of the IPv4 user 1, the terminal of the IPv4 user 2, and the terminal of IPv4 user 3 separately.

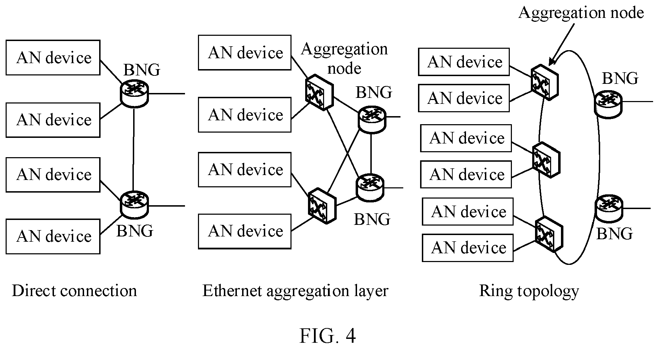

The BNG includes a plurality of physical ports, and different physical ports may be used for access of different access node (access node, AN) devices. A manner in which an AN device accesses the BNG includes but is not limited to a manner in which the AN device is directly connected to the BNG, and a manner in which the AN device is connected to the BNG through an aggregation device. For example, FIG. 4 is an example in which a BNG provides a plurality of physical ports for access of different AN devices. One terminal is identified with a unique virtual local area network (Virtual LAN, VLAN) tag (VLAN Tag), and the terminal accesses the BNG through a fixed physical port of the BNG. Information about the physical port and the VLAN tag used by the terminal to access the BNG are equivalent to a location of the terminal.

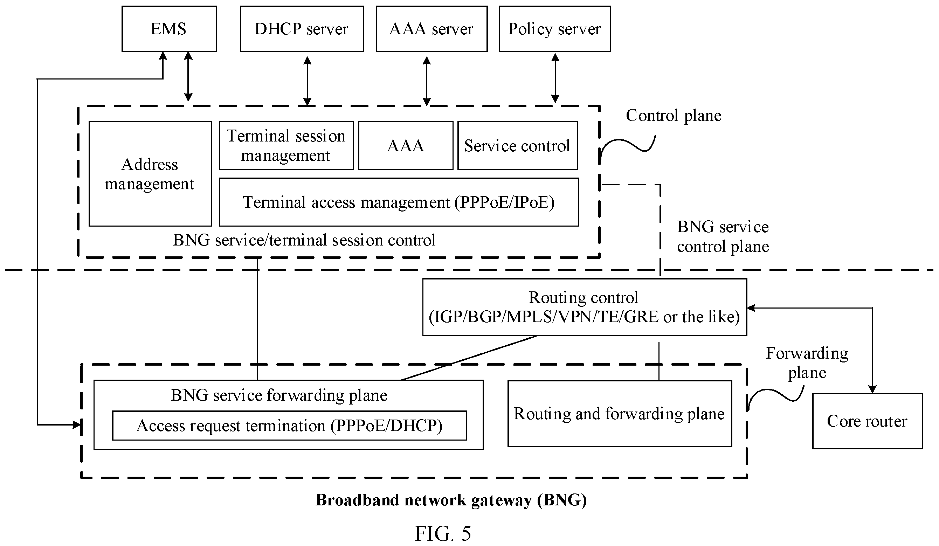

FIG. 5 is an example of functional modules in a BNG. An upper dashed box in FIG. 5 is a control plane of the BNG. The control plane of the BNG provides functions such as access management, session management, authentication, authorization, and accounting (Authentication, Authorization, and Accounting, AAA), address assignment, and service policy control. A lower dashed box in FIG. 5 is a forwarding plane of the BNG. The forwarding plane of the BNG is configured to implement forwarding processing of a terminal, including: sending an access protocol packet to the control plane; forwarding, to the terminal, a control packet that is sent by the control plane and that is destined to the terminal; and performing binding check on an uplink data packet of the terminal (where after authentication succeeds, a corresponding binding table is generated on the forwarding plane); and performing IP forwarding, quality of service (Quality of Service, QoS) processing, statistics collection, and the like.

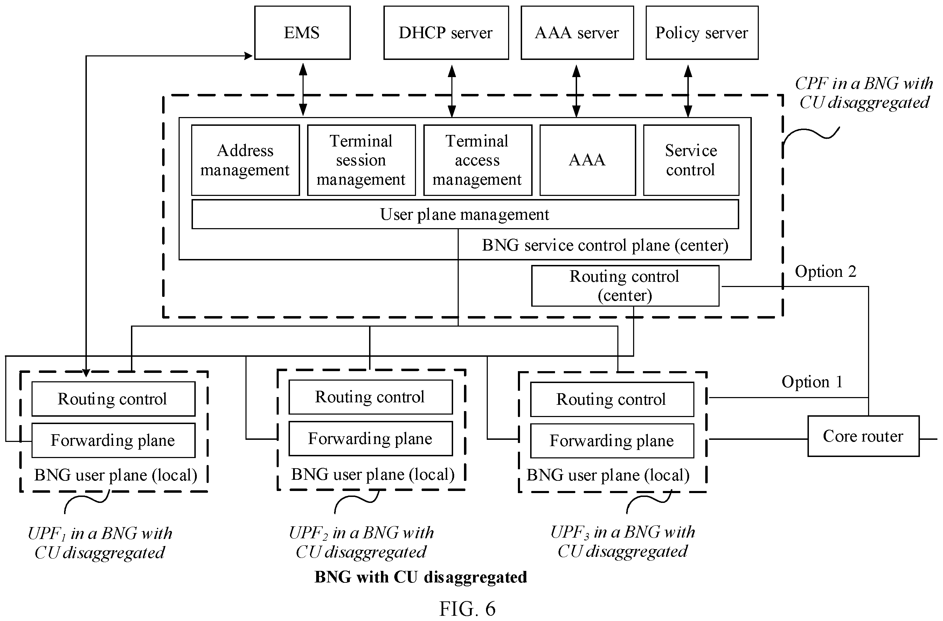

In 2019, the Broadband Forum (Broadband Forum, BBF) implements defining of architectures and protocols related to a Virtual Broadband Network Gateway (Virtual Broadband Network Gateway, vBNG) CU system. FIG. 6 is a BNG with a CU disaggregated architecture defined in BBF TR-384. In the BNG with the CU disaggregated architecture, a control plane (CPF) is disaggregated from the physical BNG and deployed on a data center. The physical BNG retains a forwarding plane function and the forwarding plane function is still deployed at an original location. Optionally, the BNG with CU disaggregated includes a plurality of UPFs. For example, the BNG with CU disaggregated shown in FIG. 6 includes three UPFs: a UPF 1, a UPF 2, and a UPF 3. Optionally, the plurality of UPFs in the BNG with the CU disaggregated architecture are distributed at different locations. Optionally, the plurality of UPFs in the BNG with the CU disaggregated architecture coordinately share a forwarding task based on a distributed architecture.

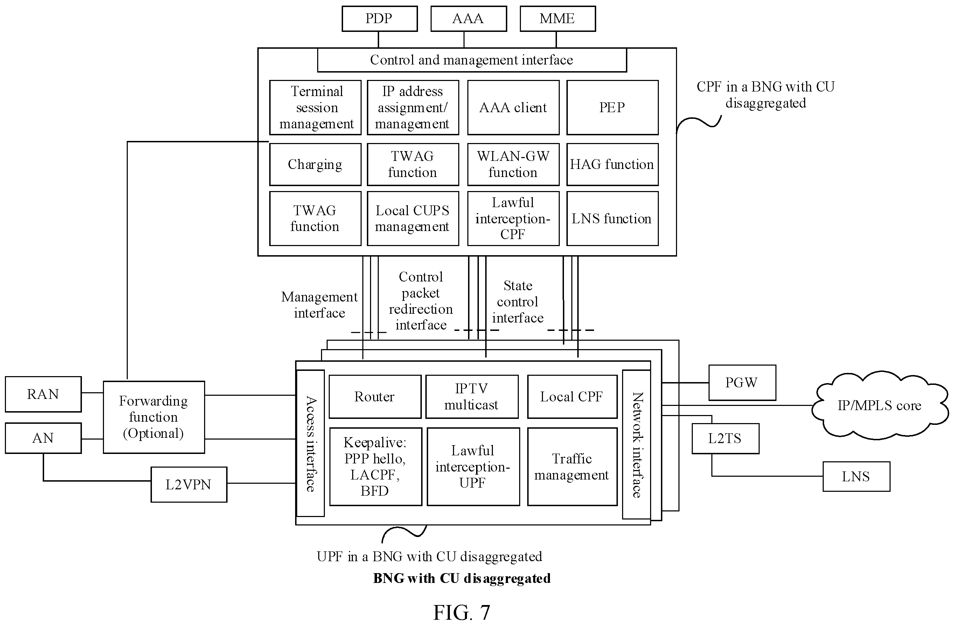

FIG. 7 shows three types of interfaces between a control plane (Control Plane, CP for short, also referred to as a control plane) and a user plane (User Plane, UP for short, also referred to as a forwarding plane or a user plane) in a vBNG CU system defined in BBF TR-459. The three types of interfaces between a CPF and a UPF include a management interface (Management interface, Mi), a control packet redirection interface (Control Packet Redirection interface, CPRi), and a state control interface (State Control interface, SCi).

The management interface adopts the XML-based Network Configuration Protocol (Netconf)/YANG (a data modeling language) protocol for communication.

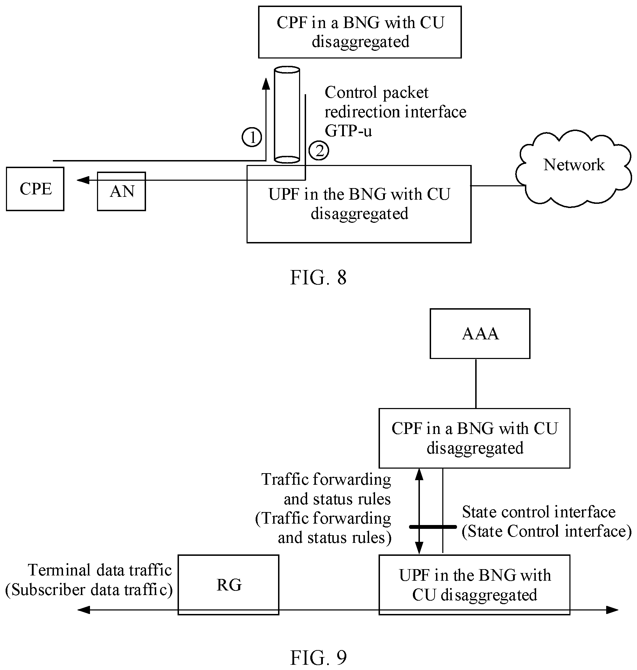

The control packet redirection interface is configured to complete forwarding of a protocol packet between customer premise equipment (Customer Premise Equipment, CPE) and the CPF. The control packet redirection interface uses a GPRS tunneling protocol-user plane (GPRS tunneling protocol (GTP)-user plane, GTP-u) tunnel. FIG. 8 is an example of a function of the control packet redirection interface.

The state control interface uses the Packet Forwarding Control Protocol (Packet Forwarding Control Protocol, PFCP) defined in 3GPP TS 29.244 for communication. The state control interface is mainly used to implement the following functions: reporting, by the UPF, node information to the CPF; after access of a terminal, delivering, by the CPF, a forwarding control behavior to the UPF for execution; and collecting, by the UPF, statistics and reports the statistics to the CPF. FIG. 9 is an example of a function of the state control interface.

The foregoing describes the BNG with CU disaggregated. A packet processing method provided in embodiments of this application can be applied to a scenario in which a BNG with CU disaggregated performs access authentication on a static user or an abnormal offline user. The following uses a scenario A and a scenario B as examples to describe the two scenarios.

### Scenario A: Static user access scenario

A static user is a user having a fixed IP address. The static user is also referred to as a private-line subscriber. The fixed IP address is also referred to as a static IP address. Specifically, the IP address of the static user is pre-configured on a BNG. When an IPoE terminal of the static user needs to access a network, the IPoE terminal sends an address resolution protocol (Address Resolution Protocol, ARP) packet, an IPv4 data packet, a neighbor discovery (ND) packet, or an Internet Protocol version 6 (Internet Protocol version 6, IPv6) data packet to the BNG by using the pre-configured IP address. After receiving the packet, the BNG authenticates access of the terminal based on a source IP address in the packet.

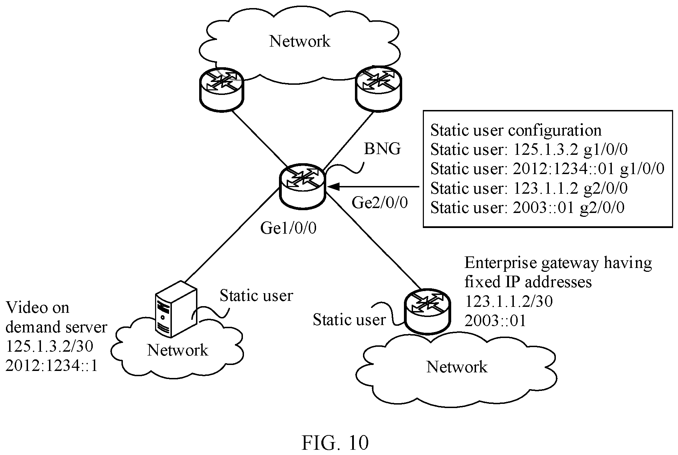

For example, FIG. 10 shows a static user access scenario. Entries of four static users are pre-configured on a BNG. Each entry stores an IP address of one static user and access location information of the static user. The location information is represented by using IDs of a slot (slot), a card (card), and a port (also referred to as an optical port or a physical port, port) that are accessed by an IPoE terminal on the BNG. Content of the entry of the static user is in a format of "IP address/interface type/slot/card/port". For example, the four entries shown in FIG. 10 respectively include 125.1.3.2 gl/0/0, 2012:1234::01 gl/0/0, 123.1.1.2 g2/0/0, and 2003::01 g2/0/0. In the character string 125.1.3.2 gl/0/0, 125.1.3.2 indicates that an IPv4 address of a static user 1 is 125.1.3.2; g indicates that a type of an interface accessed by the static user 1 is a Gigabit Ethernet (GigaEthernet, GE); and 1/0/0 indicates that IDs of a slot, a card, and a port accessed by the static user 1 are 1, 0, and 0 respectively. In the character string 2012: 1234: :01 g1/0/0, 2012:1234::01 indicates that an IPv6 address of the static user 1 is 125.1.3.2; g indicates that a type of an interface accessed by the static user 1 is a GE; and 1/0/0 indicates that IDs of a slot, a card, and a port accessed by the static user 1 are 1, 0, and 0 respectively. Meanings of 123.1.1.2 g2/0/0 and 2003::01 g2/0/0 are similar as the meanings above. A video on demand server and an enterprise gateway in FIG. 5 are both examples of IPoE terminals of static users. The video on demand server has fixed IP addresses 125.1.3.2/30 and 2012:1234::1. The video on demand server may trigger access by using either IP address of 125.1.3.2/30 and 2012:1234::1. The enterprise gateway has fixed IP addresses 123.1.1.2/30 and 2003::01. The enterprise gateway can trigger access by using either IP address of 123.1.1.2/30 and 2003::01.

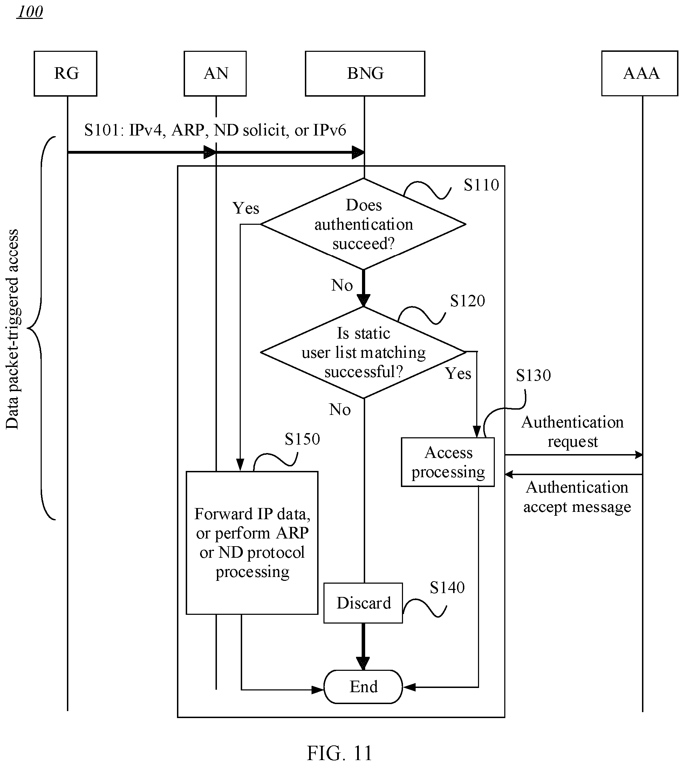

FIG. 11 is a flowchart of a method 100 for accessing a BNG by a static user. Because there is no authentication protocol interaction part during access of an IPoE terminal of a static user, the following S101 to S150 are usually used for access authentication.

S101: An IPoE terminal of a static user sends an ARP packet, an IPv4 data packet, an ND packet, or an IPv6 data packet.

S110: A BNG receives the ARP packet, the IPv4 data packet, the ND packet, or the IPv6 data packet from an incoming interface, and extracts a source IP address from the packet. The BNG determines, based on the source IP address, whether authentication succeeds. If the authentication fails, perform S120. If the authentication succeeds, perform S150.

S120: The BNG matches the packet with a local static user list. If the matching succeeds, perform S130, and then perform authentication. If the matching fails, perform S140.

S130: The BNG performs access processing. Specifically, binding authentication is used for the static user authentication. To be specific, access location information of the terminal is used (where the BNG uses IP+Port+VLAN tag to identify a location of the terminal). The BNG fills the location information in a Radius authentication request packet, and a background Radius server identifies the location information for authentication and authorization.

S140: The BNG discards the ARP packet, the IPv4 data packet, the ND packet, or the IPv6 data packet.

S150: The BNG forwards the IPv4 data packet or the IPv6 data packet, or the BNG processes the ARP packet or the ND packet according to a protocol.

It can be learned from the foregoing procedure that if masquerade attack traffic enters the BNG, the BNG needs to perform static user list matching.

Scenario B: Abnormal offline IPoE user access scenario

An abnormal offline user (terminal) is an IPoE user who dynamically obtains an IP address. If a link or hardware of a BNG is faulty, the BNG interrupts a service of the affected IPoE user. In this case, the user is unaware of the fault and continues to use the IP address within a lease period of the IP address.

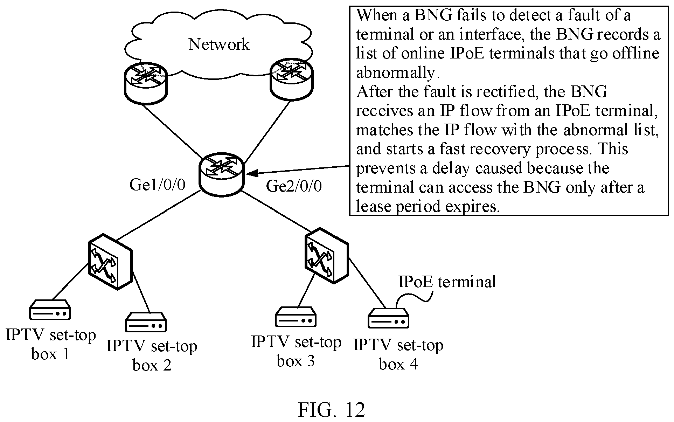

The scenario B is also referred to as a scenario in which a long-lease user quickly goes online. For example, FIG. 12 shows an abnormal offline IPoE user access scenario. An IPTV set-top box in FIG. 12 is an example of an IPoE terminal. Specifically, the IPTV set-top box accesses a BNG according to IPoE (namely, a manner according to the DHCP protocol). The DHCP protocol does not include an authentication process. Therefore, this type of terminal also uses a binding authentication manner to perform access. A detailed procedure is the same as the static user access procedure in the scenario A. When the BNG fails to detect a fault of the terminal or an interface, the BNG records an abnormal offline IPoE terminal list. After the fault is rectified, the BNG receives an IP flow from the IPoE terminal, matches the IP flow with the abnormal offline IPoE terminal list, and starts a fast recovery process. This prevents a delay caused because the IPoE terminal can access the BNG only after a lease period expires.

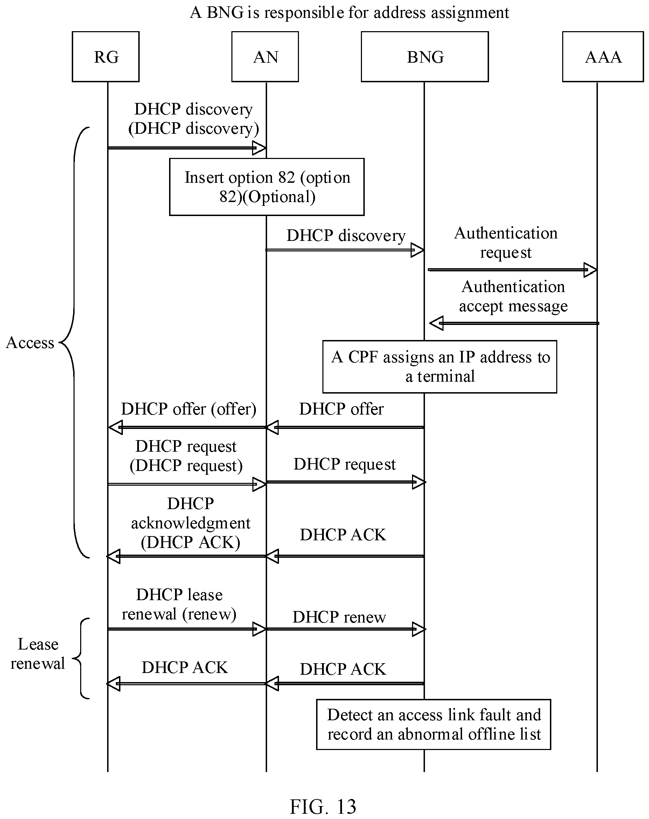

FIG. 13 is a flowchart of access and lease renewal of an IPoE terminal by using the DHCP protocol. An IPoE terminal obtains an IP address and a lease period by using the DHCP protocol. The lease period is three days by default, and the lease period may be configured to be shorter during deployment. For example, the lease period may be two hours. The terminal determines, by using the DHCP protocol for lease renewal, that the terminal can continue to hold the IP address. A DHCP lease renewal procedure may be triggered when a hire period reaches 1/2 of the lease period.

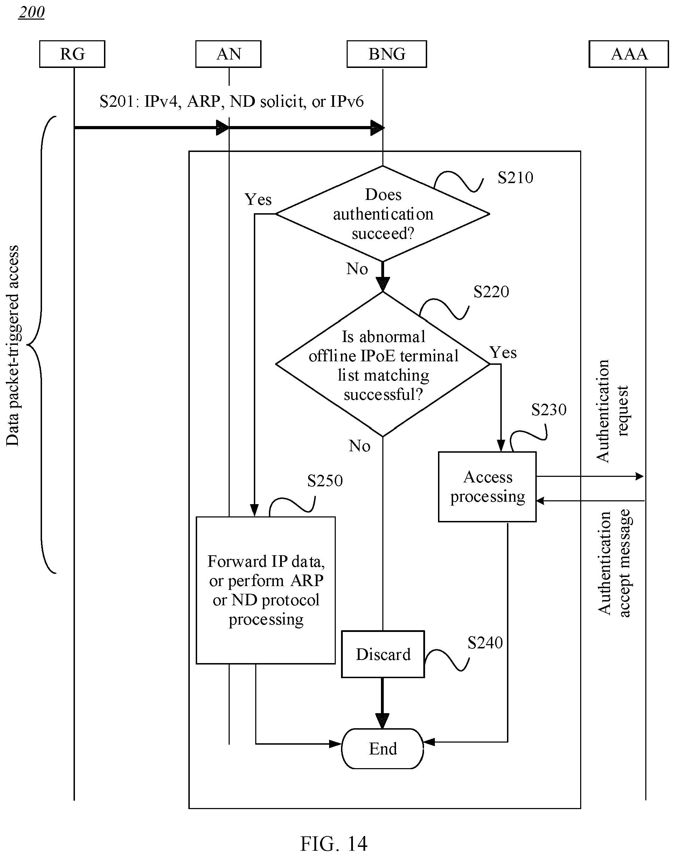

FIG. 14 is a flowchart of a method 200 for accessing a BNG by an abnormal offline IPoE terminal. The method 200 includes the following S201 to S250. An abnormal IPoE terminal access process is the same as the static user access process. A difference lies in that lists for querying are different. Specifically, the list for querying in S220 is the static user list, and a list for querying in S220 is an abnormal offline IPoE terminal list.

S201: An abnormal offline IPoE terminal sends an ARP packet, an IPv4 data packet, an ND packet, or an IPv6 data packet.

S210: A BNG receives the ARP packet, the IPv4 data packet, the ND packet, or the IPv6 data packet from an incoming interface, and extracts a source IP address from the packet. The BNG determines, based on the source IP address, whether authentication succeeds. If the authentication fails, perform S220. If the authentication succeeds, perform S250.

S220: The BNG matches the packet with the local abnormal offline IPoE terminal list. If the matching succeeds, perform S230, and then perform authentication. If the matching fails, perform S240.

S230: The BNG performs access processing. Specifically, binding authentication is used for the abnormal offline IPoE terminal authentication. To be specific, access location information of the terminal is used (where the BNG uses IP+Port+VLAN tag to identify a location of the terminal). The BNG fills the location information in a Radius authentication request packet, and a background Radius server identifies the location information for authentication and authorization.

S240: The BNG discards the ARP packet, the IPv4 data packet, the ND packet, or the IPv6 data packet.

S250: The BNG forwards the IPv4 data packet or the IPv6 data packet, or the BNG processes the ARP packet or the ND packet according to a protocol.

Embodiments of this application relate to application of PFCP. For ease of understanding, the following first describes related concepts of terms in PFCP in embodiments of this application.
(1) PFCP

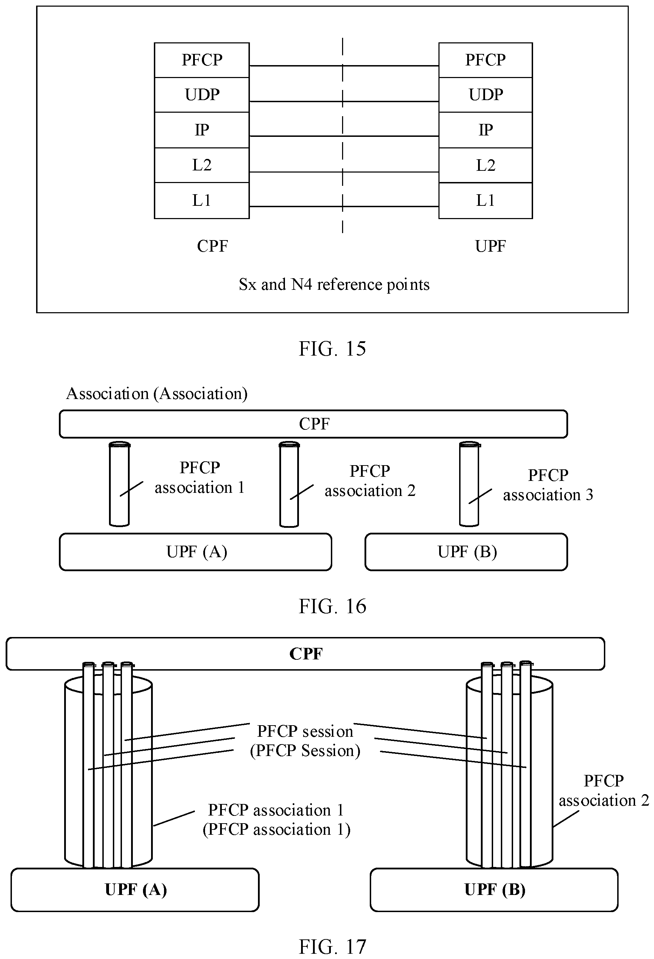

PFCP is a communication protocol between a control plane and a user plane. FIG. 15 is an example of a location of PFCP in a protocol stack. PFCP is carried over the User Datagram Protocol (User Datagram Protocol, UDP), and an IP layer may be IPv4 or IPv6. In PFCP, a UP is referred to as a UPF, and a CP is referred to as a CPF. PFCP is defined in the 3rd Generation Partnership Project (3rd Generation Partnership Project, 3GPP) TS 29.244 specification.

### (2) UDP port number in a PFCP message

In a request message (Request message) in PFCP, a UDP destination port (UDP Destination port) number is 8805, and a UDP source port (UDP Source port) number is locally allocated by a transmitting end of the PFCP message. In a response message in PFCP, a UDP destination port number is the source port number in the request message. A UDP source port number in the response message in PFCP is the destination port number in the corresponding request message.

### (3) PFCP association (PFCP Association)

When a connection (which is expressed by a pair of a destination IP address and a source IP address) is established between a CPF and a UPF, the connection is referred to as a PFCP association (where nodes are used for distinguishing inside the PFCP association). Theoretically, a plurality of PFCP associations may be established between a pair of a CPF and a UPF, and control information carried by each of the PFCP associations is independent of each other. FIG. 16 is an example of establishing a plurality of PFCP associations between a CPF and a UPF. In FIG. 16, a CPF and two UPFs establish three PFCP associations in total. The CPF and a UPF (A) establish two PFCP associations: a PFCP association 1 and a PFCP association 2. The CPF and a UPF (B) establish a PFCP association 3.

### (4) PFCP session (PFCP session)

After a terminal goes online, a CPF delivers control data to a UPF. Information about each terminal is referred to as a PFCP session. Refer to FIG. 17. Each PFCP association corresponds to control information of a part of PFCP sessions. In FIG. 17, each PFCP association corresponds to control information of a part of sub-sessions (Sub-Sessions). In this case, for sending of a response message (message) of a PFCP session, an IP header (IP header) of a corresponding request message of the PFCP session needs to be found, to exchange a destination IP address and a source IP address, so as to encapsulate an IP header of the response message. Data is in a network byte order.

### (5) PFCP message

Table 1 is an example of a PFCP message format (PFCP Message Format). A PFCP message includes two parts: a PFCP message header (PFCP message header) and an information element (Information Element, IE). One PFCP message includes at least one PFCP message header (PFCP message header), and optionally further includes an IE. There may be one or more IEs in one PFCP message.

**Table 1**

| | Bits | | | | | | | |
|---|---|---|---|---|---|---|---|---|
| Octets | 8 | 7 | 6 | 5 | 4 | 3 | 2 | 1 |
| 1 to m | PFCP message header | | | | | | | |
| m+1 to n | Zero or more information element(s) | | | | | | | |

Table 2 is an example in which one UDP packet carries a plurality of PFCP messages. An FO (Follow ON) in each of preceding PFCP message headers in the UDP packet is identified to be 1. An FO in the last PFCP message header is identified to be 0.

**Table 2**

| | Bits | | | | | | | |
|---|---|---|---|---|---|---|---|---|
| Octets | 8 | 7 | 6 | 5 | 4 | 3 | 2 | 1 |
| 1 to m | PFCP message 1 header | | | | | | | |
| m+1 to n | Zero or more information element(s) | | | | | | | |
| n+1 to p | PFCP message 2 header | | | | | | | |
| p+1 to q | Zero or more information element(s) | | | | | | | |
| ... | ... | | | | | | | |
| ... | ... | | | | | | | |
| r to s | PFCP message N header | | | | | | | |
| s+1 to u | Zero or more information element(s) | | | | | | | |

### (6) PFCP message header

Table 3 is an example of a general format of a PFCP message header. The message header is a variable-length structure. The first four octets are in a fixed format. A flag field indicates whether extra information is carried. As shown in Table 3, the message header needs to be in a format of 4-octet alignment, and members are in a network byte order.

**Table 3**

| | Bits | | | | | | | |
|---|---|---|---|---|---|---|---|---|
| Octets | 8 | 7 | 6 | 5 | 4 | 3 | 2 | 1 |
| 1 | Version | | | Spare | Spare | FO | MP | S |
| 2 | Message Type | | | | | | | |
| 3 | Message Length (1^{st} Octet) | | | | | | | |
| 4 | Message Length (2^{nd} Octet) | | | | | | | |
| m to k(m+7) | If an S flag is set to 1, it indicates that the 5^{th} to 12^{th} octets carry an SEID (Session Endpoint ID, session ID); otherwise, the 5^{th} to 12^{th} octets do not carry the SEID. (If S flag is set to "1", then SEID shall be placed into octets 5-12. Otherwise, SEID field is not present at all.) (That is, a sequence number starts from the 5^{th} octet.) | | | | | | | |
| n to (n+2) | Sequence Number | | | | | | | |
| (n+3) | Spare | | | | | | | |

Table 4 is an example of a meaning of each field in a PFCP message header.

**Table 4**

| | |
|---|---|
| S flag | When a value of the S flag is 1, it indicates that a packet includes an SEID field. |
| SEID | SEID is short for Session Endpoint Identifier, which is a unique identifier of a "PFCP session" or a "subscriber-session" described above. A length of the SEID is 8 octets. |
| | The SEID uniquely identifies information about a session under control of the SEID. |
| MP flag | Indicates a message priority. |
| | If a value of this flag is 1, the priority is stored from the 5^{th} bit to the 8^{th} bit in the 16^{th} octet. |
| | When a system is overloaded, this parameter can be carried in a message. A receiver preferentially processes a high-priority message and discards a low-priority message. |
| FO flag | Indicates follow-on. If a packet carries a plurality of messages, an FO flag of the last message header is 0, and FO flags of preceding message headers are 1. |
| Sequence Number | Indicates a sequence number, and includes three octets. |
| | If a value of the S flag is 0, the beginning of a value of the SN moves forward to the 5^{th} octet. |
| Version | Indicates a version number, and includes three bits. A current version number is 1, and is 001B in binary. |
| Spare | Spare is a reserved field to fill four octets, and needs to be set to 0. |
| Message Type | Message type |
| Message Length | Indicates a message length in decimal. The message length does not include a fixed 4-octet part of the header. The length includes the following SEID, SN, and IEs. |

In the PFCP message header, padded content from the 5^{th} octet is related to a sequence of the flags in the 1^{st} octet. In a sequence from the 1^{st} bit to the 8^{th} bit, when a bit is 1, the bit is padded. Table 5 is an example of a message header format of a PFCP node message (Node message).

**Table 5**

| | Bits | | | | | | | |
|---|---|---|---|---|---|---|---|---|
| Octets | 8 | 7 | 6 | 5 | 4 | 3 | 2 | 1 |
| 1 | Version | | | Spare | Spare | FO=0 | MP=0 | S=0 |
| 2 | Message Type | | | | | | | |
| 3 | Message Length (1^{st} Octet) | | | | | | | |
| 4 | Message Length (2^{nd} Octet) | | | | | | | |
| 5 | Sequence Number (1^{st} Octet) | | | | | | | |
| 6 | Sequence Number (2^{nd} Octet) | | | | | | | |
| 7 | Sequence Number (3^{rd} Octet) | | | | | | | |
| 8 | Spare | | | | | | | |

Table 6 is an example of a format of a PFCP session message header. A value of an S flag is 1. A SEID starts from the 5^{th} octet. The SEID in the message header is a remote peer's SEID (remote peer's SEID), to be specific, the SEID indicates a SEID of a receiver.

**Table 6**

| | Bits | | | | | | | |
|---|---|---|---|---|---|---|---|---|
| Octets | 8 | 7 | 6 | 5 | 4 | 3 | 2 | 1 |
| 1 | Version | | | Spare | Spare | FO | MP | S=1 |
| 2 | Message Type | | | | | | | |
| 3 | Message Length (1^{st} Octet) | | | | | | | |
| 4 | Message Length (2^{nd} Octet) | | | | | | | |
| 5 | Session Endpoint Identifier (1^{st} Octet) | | | | | | | |
| 6 | Session Endpoint Identifier (2^{nd} Octet) | | | | | | | |
| 7 | Session Endpoint Identifier (3^{rd} Octet) | | | | | | | |
| 8 | Session Endpoint Identifier (4^{th} Octet) | | | | | | | |
| 9 | Session Endpoint Identifier (5^{th} Octet) | | | | | | | |
| 10 | Session Endpoint Identifier (6^{th} Octet) | | | | | | | |
| 11 | Session Endpoint Identifier (7^{th} Octet) | | | | | | | |
| 12 | Session Endpoint Identifier (8^{th} Octet) | | | | | | | |
| 13 | Sequence Number (1^{st} Octet) | | | | | | | |
| 14 | Sequence Number (2^{nd} Octet) | | | | | | | |
| 15 | Sequence Number (3^{rd} Octet) | | | | | | | |
| 16 | Message Priority | | | | Spare | | | |

### (7) IE in a PFCP message

The IE may be understood as an attribute. The IE has a TLV encapsulation format. There may be a nested relationship between different IEs. Whether an IE is mandatory is specified based on different contexts. For example, classification of IEs is shown in the following Table 7.

**Table 7**

| Classification of whether an IE appears in this service procedure | Descriptions |
|---|---|
| Mandatory (M) | Mandatory |
| Conditional (C) | The IE needs to be carried if a specific condition is satisfied. |
| Conditional-Optional (CO) | The IE may be carried if a specific condition is satisfied. |
| Optional (O) | Whether the IE is carried is optional. |

Based on different nesting manners, the IE is classified into a grouped IE (grouped IE) and an embedded IE (embedded IE). The embedded IE is an attribute of a smallest unit. One grouped IE may include a plurality of embedded IEs. Refer to Table 8 and Table 9. Table 8 shows a format of an IE, and Table 9 shows a meaning of each field in an IE.

**Table 8**

| | Bits | | | | | | | |
|---|---|---|---|---|---|---|---|---|
| Octets | 8 | 7 | 6 | 5 | 4 | 3 | 2 | 1 |
| 1 to 2 | Type=xxx (decimal) | | | | | | | |
| 3 to 4 | Length=n | | | | | | | |
| p to (p+1) | Enterprise ID | | | | | | | |
| k to (n+4) | An IE (information element or attribute) indicates a piece of data or a group of attributes (IE specific data or content of a grouped IE). The grouped IE is an IE including a plurality of sub-attributes. | | | | | | | |

**Table 9**

| | |
|---|---|
| Type | Indicates a type of the IE and includes two octets. |
| | A value of 0 to 32767 indicates an IE of the 3GPP standard. |
| | A value of 32768 to 65535 indicates a vendor-defined IE. |
| Length | Indicates a length, and includes two octets in decimal. The length does not include the four octets of the type field and the length field. |
| Enterprise ID | For a 3GPP IE, there is no enterprise ID. |
| | For a vendor-defined IE, the field is a vendor number. |
| | Vendor number: IANA-assigned "SMI Network Management Private Enterprise Codes" (IANA-assigned "SMI Network Management Private Enterprise Codes"). |
| | Enterprise ID is an optional field. |
| Data or sub-IE | Indicates a data part or a sub-IE. |

Message types are defined in Table 10 below.

**Table 10**

| Message type value (decimal) | Message |
|---|---|
| 0 | Reserved |
| | PFCP Node related messages |
| 1 | PFCP Heartbeat Request |
| | Heartbeat request |
| 2 | PFCP Heartbeat Response |
| | Heartbeat response |
| 3 | PFCP PFD Management Request |
| 4 | PFCP PFD Management Response |
| 5 | PFCP Association Setup Request |
| | Association setup request (negotiation capability) |
| 6 | PFCP Association Setup Response |
| | Association setup response |
| 7 | PFCP Association Update Request |
| | Association update request (capability change) |
| 8 | PFCP Association Update Response |
| | Association update response |
| 9 | PFCP Association Release Request |
| | Association release request |
| 10 | PFCP Association Release Response |
| | Association update response |
| 11 | PFCP Version Not Supported Response |
| | This message is returned when an unsupported PFCP version is received. |
| | An SN in a message header is randomly set to a value, which is to be ignored by a receiver. |
| | This message only includes a header part, but not a payload part. |
| 12 | PFCP Node Report Request |
| | Node-level report request |
| 13 | PFCP Node Report Response |
| | Node-level report response |
| 14 | PFCP Session Set Deletion Request |
| | Session set deletion request |
| 15 | PFCP Session Set Deletion Response |
| | Session set deletion response |
| 16 to 49 | For future use |
| | PFCP Session related messages |
| 50 | PFCP Session Establishment Request |
| | Session establishment request |
| 51 | PFCP Session Establishment Response |
| | Session establishment response |
| 52 | PFCP Session Modification Request |
| | Session update request |
| 53 | PFCP Session Modification Response |
| | Session update response |
| 54 | PFCP Session Deletion Request |
| | Session deletion request |
| 55 | PFCP Session Deletion Response |
| | Session deletion response |
| 56 | PFCP Session Report Request |
| | Session-level report request |
| 57 | PFCP Session Report Response |
| | Session-level report response |
| 58 to 99 | For future use |
| | Other messages |
| 100 to 255 | For future use |

In PFCP, a plurality of PFCP messages may be bundled (PFCP messages bundling). Specifically, one UDP packet may carry a plurality of PFCP messages, and an SN of each message header is independent. If such bundled messages are discarded during transmission, when the messages need to be retransmitted, a sequence for retransmission does not necessarily need to be a previous bundling sequence.

### (8) PFCP forwarding model

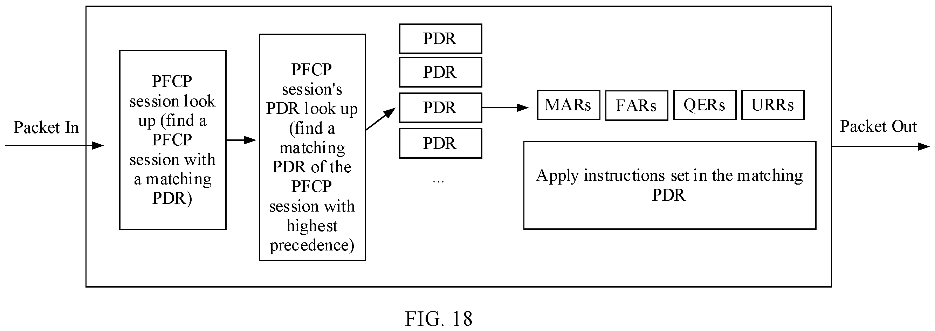

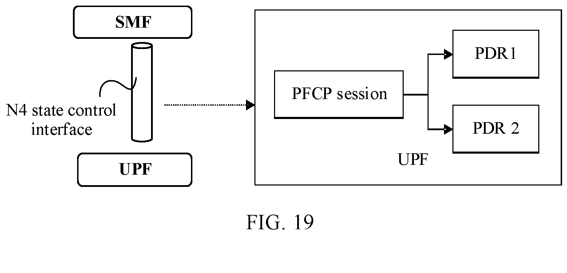

Based on services of 5th generation mobile communication technologies (5th generation mobile networks or 5th generation wireless systems, 5th-Generation, 5G), an abstract UPF model is defined in PFCP. Based on this model, node messages, session messages, and a series of IEs between a control plane and a user plane are defined. For example, FIG. 18 is an example of a procedure in which a UPF processes a packet. The procedure in which the UPF processes the packet is forwarding the packet in a flow matching manner. This is similar to a principle of an access control list (Access Control List, ACL). Refer to FIG. 18. After entering a system, matching is performed on the packet and a rule table of a packet detection rule (Packet Detection Rule, PDR), and after the packet matches the rule table, a fixed action (action) is performed. The process in which the UPF processes the packet includes two concepts: a PFCP session and a PDR. FIG. 19 is an example of a PFCP session (PFCP Session). An SMF delivers a Packet Detection Rule (Packet Detection Rule, also referred to as a packet detection rule PDR) by using a PFCP session over an N4 interface. A UPF performs the PDR to process a packet.

### (9) PDR

The PDR is used for defining how to perform packet matching. Each PDR includes a group of "MAR+FAR+QER+URR". An MAR in FIG. 18 indicates a multi-access rule (Multi-Access Rule, a packet matching rule), and the MAR is similar to a process of searching a forwarding information base (FIB) and an ACL. Information in the PDR includes an incoming interface (Incoming Interface), a local full qualified tunnel endpoint identifier (Local Full Qualified TEID, Local-F-TEID, which is an access form corresponding to a tunnel termination manner and is a tunnel ID), a network instance (Network Instance, namely, a VRF instance), a user equipment (User Equipment, UE) IP address (terminal IP address), and a terminal media access control (Media Access Control, Client MAC) address.

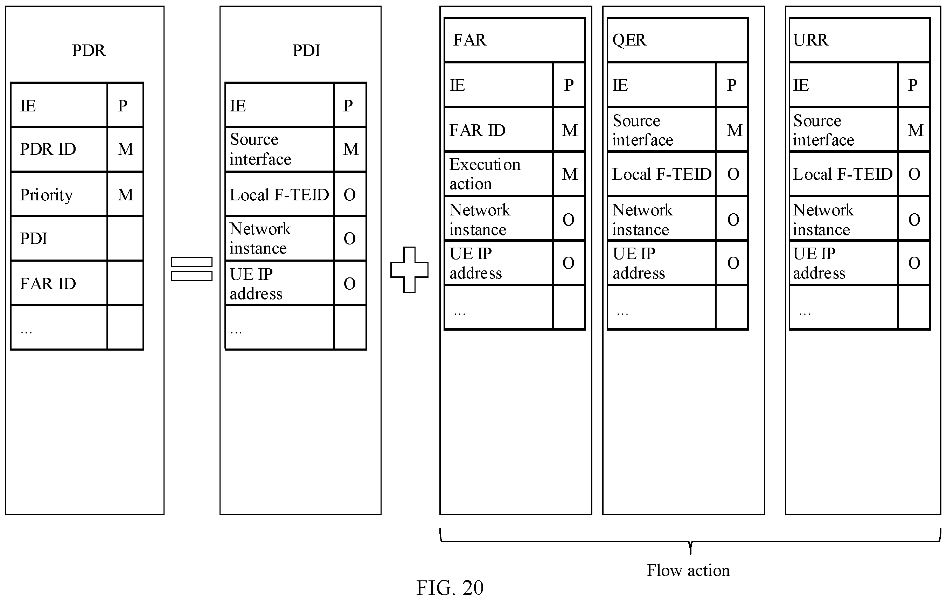

FIG. 20 is an example of a PDR. The PDR is a combination of packet detection information (Packet Detection Information, PDI) and a packet action (Packet Action, PA, also referred to as a flow action). When a user packet matches a match field (for example, a UE IP address) in the PDI, the user packet successfully matches the PDR, and a UPF executes the PAin the PDR.

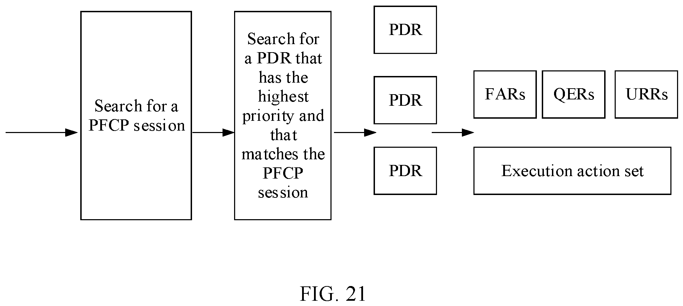

FIG. 21 is an example of performing session processing by a UPF according to PFCP. After an uplink/downlink user plane packet enters a UPF, the UPF finds, based on a matched PDR, a PFCP session to which the packet belongs, selects a successfully matched PDR having the highest priority from the PFCP session, and performs a flow action in the PDR, to complete processing of the packet.

A PA indicates a processing action performed by the UPF on the packet. The PA includes a forwarding action rule (Forwarding Action Rule, FAR), a QoS enforcement rule (QoS Enforcement Rule, QER), and a Usage Reporting Rule (Usage Reporting Rule, URR).

The FAR corresponds to an action performed by the UPF. The action includes but is not limited to discarding, forwarding, buffering, notifying a CPF (Notify the CPF, NOCP), DUPL (Duplication), and IPMA (IP Multicast Accept). For example, the forwarding action is GTP encapsulation/decapsulation.

The NOCP indicates that the first downlink flow arrives and is buffered. The DUPL indicates packet duplication, which is applied to scenarios such as lawful interception and mirroring (Mirror). The IPMA indicates joining or leaving a multicast group. The FAR is a forwarding action, including an encapsulation manner. The FAR is similar to a behavior definition after searching a forwarding information base (Forwarding Information Base, FIB) and an ACL.

The resource usage report (Usage Reporting Rule, URR) is used to perform actions such as statistics reporting, for example, offline charging reporting. The URR corresponds to a session. When resource usage of the UPF reaches a threshold, for example, a traffic quota, that a periodicity ends, or that an event occurs, the UPF may report to the CPF.

The QER indicates a quality of service (Quality of Service, QoS) processing rule, which is used for bandwidth guarantee and priority scheduling, for example, committed access rate (Committed Access Rate, Car, also referred to as "limiting rate" generally) or queue (Queue) processing, mirroring (Mirror), and lawful interception (Lawful interception, LW).

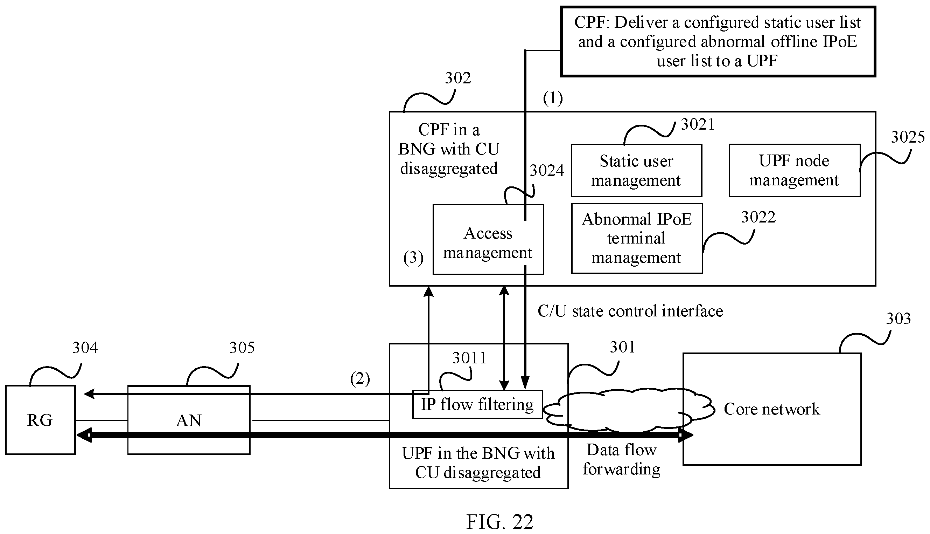

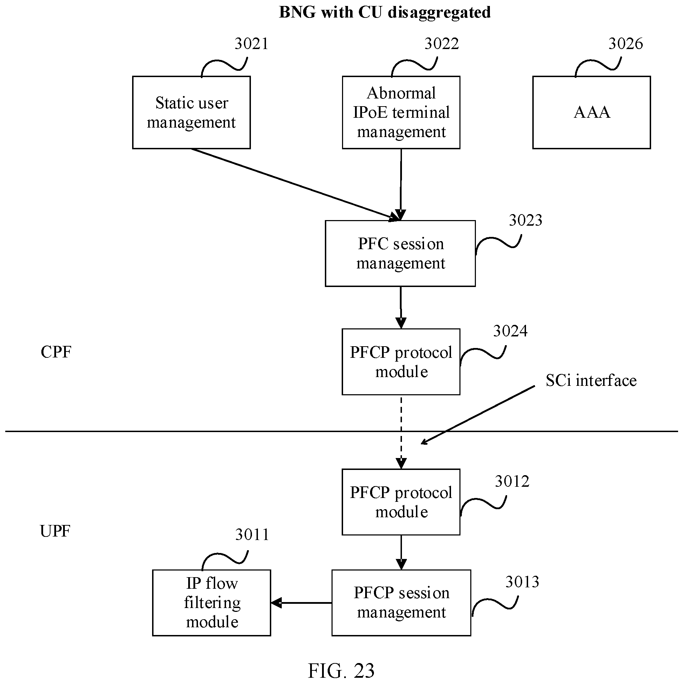

Refer to FIG. 22 and FIG. 23. The following describes a system architecture provided in embodiments of this application.

Refer to FIG. 22. An embodiment of this application provides a network system 300. The network system 300 includes a UPF 301, a CPF 302, a core network 303, an RG 304, and an AN 305. The UPF 301 is an example of a UP device in the following method embodiment, and the CPF 302 is an example of a CP device in the following method embodiment. Different network elements in the UPF 301, the CPF 302, the core network 303, the RG 304, and the AN 305 are connected to each other by using a wireless network or a wired network.

Meanings of (1), (2), and (3) in FIG. 22 are as follows:
(1) The CPF delivers a configured static user table and a configured abnormal offline IPoE user table to the UPF. For example, a static user management module 3021 in the CPF 302 obtains the configured static user table, an abnormal IPoE terminal management module 3022 records the abnormal offline IPoE user table, and the CPF 302 delivers the static user table and the abnormal offline IPoE user table to an IP flow filtering module 3011 in the UPF through a state control interface.
(2) When an IP data flow triggers access, the UPF checks the static user table and the abnormal offline IPoE user table. Specifically, the IP flow filtering module 3011 is deployed on the UPF. When the UPF receives an ARP packet, an IPv4 data packet, an ND packet, or an IPv6 data packet, if the UPF fails to check a local authentication binding table, the UPF first performs matching at the IP flow filtering module 3011, and sends the packet to the CPF only after the matching succeeds. In addition, the UPF provides CPF rate limiting control on the IP flow filtering module 3011.
(3) The CPF processes the IP flow to trigger access.

Specifically, refer to FIG. 23. The UPF includes the IP flow filtering module 3011, a PFCP module 3012, and a PFCP session management module 3013.

The IP flow filtering module 3011 is configured to perform IP data flow filtering.

The PFCP module 3012 is configured to receive PFCP data delivered by the CPF, parse out session content, and distribute the parsed-out session content to the PFCP session management module 3013.

The PFCP session management module 3013 is configured to parse a packet, and notify the IP flow filtering module of adding, deleting, or updating a session.

The CPF includes the static user management module 3021, the abnormal IPoE terminal management module 3022, a PFCP session management module 3023, a PFCP module 3024, an access management module 3024, a UPF node management module 3025, and an AAA module 3026.

The static user management module 3021 is configured to process a static user configuration.

The abnormal IPoE terminal management module 3022 is configured to process abnormal offline of an IPoE terminal, generate a record, and notify the PFCP session management module 3023 to deliver the record to the UPF.

The PFCP session management module 3023 is configured to: receive a service layer module notification, and deliver a static session list and an abnormal session list to the UPF.

The PFCP module 3024 is configured to encapsulate session information in a PFCP format, and send the encapsulated information to a peer party.

The following describes, by using a method 400, a method 500, a method 600, and a method 700, an example of a processing method procedure based on the communication system with CU disaggregated described above. The communication system may implement a function of the BNG.

A BNG in the method 400, the method 500, the method 600, or the method 700 is an example of a communication system. Optionally, the method 400, the method 500, the method 600, or the method 700 is not applied to the BNG, but is applied to a communication system with a CU disaggregated architecture other than the BNG, for example, applied to a CU-disaggregated serving gateway (Serving Gateway, S-GW); applied to a CU-disaggregated packet data network gateway (PDN GateWay, PGW); applied to a communication system including a mobility management function (Access and Mobility Management Function, AMF) network element, a session management function (Session Management Function, SMF) network element, and an AN network element, where the AMF or a CPF is equivalent to a CPF in the BNG, and a UPF is equivalent to a UPF in the BNG; or applied to an access gateway function (access gateway function, AGF) network element in a WT-456 fixed-mobile convergence communication system.

The following method 400, method 500, method 600, and method 700 are inventions generated based on a same concept, and are all related to how to enable a UPF to execute a security policy in advance of a CPF. The method 400 focuses on describing a procedure in which a UPF executes a security policy. The method 500 focuses on describing an overall procedure including a plurality of phases such as packet-triggered access, data forwarding, offline processing, and clearing processing. The method 600 and the method 700 focus on describing how to implement the method 500 by using PFCP.

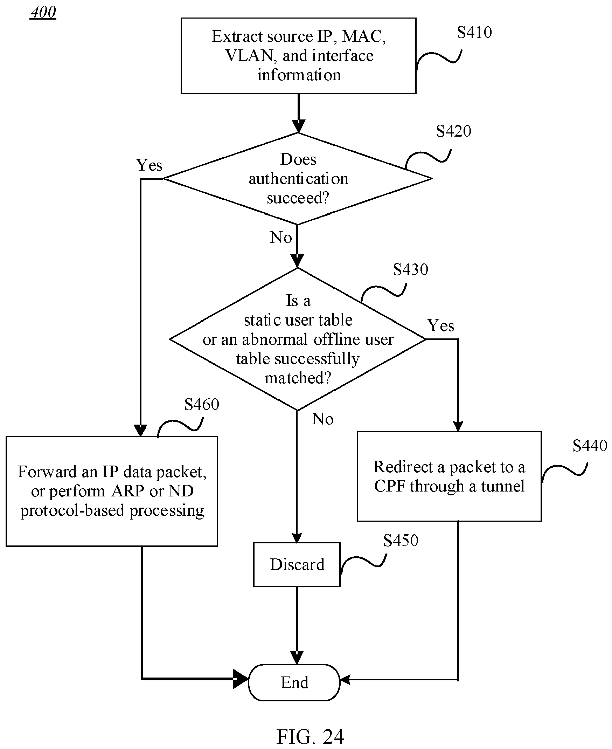

FIG. 24 is a flowchart of a packet processing method 400 according to an embodiment of this application. For example, the method 400 is performed by an IP flow filtering module in a UPF. The method 400 includes S410 to S460.

S410: Extract information such as a source IP address, a MAC address, a VLAN tag, and an interface (namely, a port that is on a UP device and that is for receiving a packet).

S420: Determine whether authentication succeeds. If the authentication fails, perform S430. If the authentication succeeds, perform S460.

S430: Determine whether matching a static user table or an abnormal offline user table succeeds. If the matching succeeds, perform S440. If the matching fails, perform S450.

S440: Redirect a packet to a CPF through a tunnel.

S450: Discard the packet.

S460: Forward an IP data packet, or perform processing according to a protocol such as the ARP protocol or the ND protocol.

It can be learned from the foregoing procedure that the packet is sent to the CPF only after the matching succeeds in S420, so that burden of the CPF is reduced and a risk that the CPF is attacked is reduced.

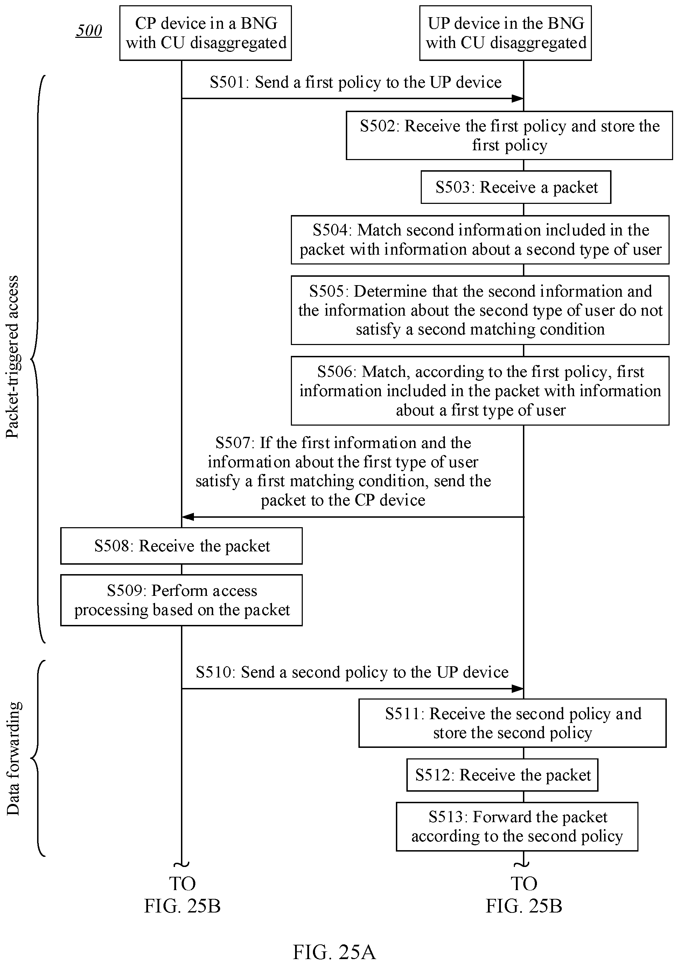

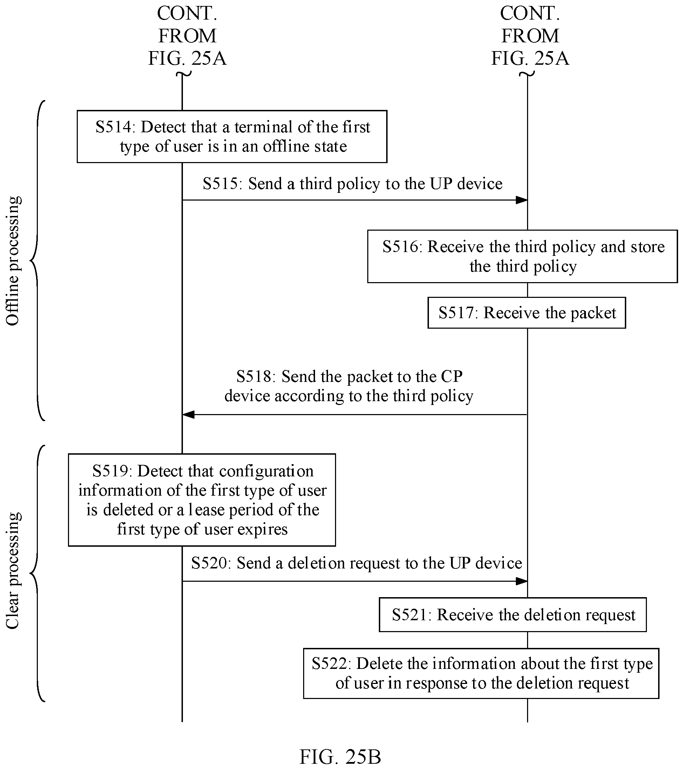

FIG. 25A and FIG. 25B are a flowchart of a packet processing method 500 according to an embodiment of this application. The method 500 includes S501 to S522.

In some embodiments, the method 500 is performed by the BNG in the system architecture shown in FIG. 1, or performed by the BNG with CU disaggregated shown in any one of FIG. 3, FIG. 6, FIG. 7, FIG. 8, FIG. 9, FIG. 22, and FIG. 23, or performed by the BNG in the static user access scenario shown in FIG. 10, or performed by the BNG in the abnormal offline user access scenario shown in FIG. 12.

Optionally, the method 500 is processed by a general-purpose central processing unit (central processing unit, CPU), may be co-processed by a CPU and a network processor (network processor, NP), or may be processed by another processor suitable for packet forwarding instead of being processed by a CPU or an NP. This is not limited in the method 500.

S501: A CP device sends a first policy to a UP device included in a BNG.

The term "policy" refers to information that includes rule (rule) and action (action) identifiers. A policy can indicate that a device performs an action corresponding to an action identifier on a packet when information in the packet satisfies a rule. The action includes but is not limited to redirection, forwarding, discarding, QoS control, and statistics reporting. For example, when PFCP is used, a policy is a PDR, a rule is PDI, and an action identifier is a PA. The CP device delivers the policy to the UP device. When receiving a packet, the UP device performs a corresponding action on the packet according to the policy delivered by the CP device in advance.

The first policy indicates to redirect a packet to the CP device when first information included in the packet and information about a first type of user satisfy a first matching condition. A matching rule in the first policy includes the information about the first type of user. An action identifier in the first policy identifies a redirection action. Optionally, the action identifier in the first policy includes an identifier of the CP device. For example, the first policy includes "Key=IP+MAC+VLAN+interface, action=to CPF".

The first type of user is a user having a fixed Internet Protocol IP address. The information about the first type of user includes but is not limited to at least one of an IP address, a MAC address, a VLAN tag, an interface index, and a port number. In some embodiments, the information about the first type of user is stored and transmitted in a form of a table. For example, the first policy includes a user table. The user table includes the information about the first type of user. For example, each entry (or referred to as each item) in the user table includes information about one first type of user.

In some embodiments, the first type of user includes at least one of a static user or an abnormal offline user. The user table includes at least one of a static user table or an abnormal user table. The static user table is also referred to as a static user list. The static user table includes information about static users. For example, each entry in the static user table includes information about one static user. The abnormal user table is also referred to as an abnormal user list or an abnormal offline user list. The abnormal user table includes information about abnormal offline users. For example, each entry in the abnormal user table includes information about one abnormal offline user. For explanations about the static user and the abnormal offline user, refer to the foregoing descriptions.

It should be understood that whether the static user table and the abnormal user table are disaggregated into different tables or combined into a same table is not limited in this embodiment. In some embodiments, the static user table and the abnormal user table are two separate tables. In some embodiments, the static user table and the abnormal user table belong to a same table. For example, the user table includes two attributes, and the two attributes respectively correspond to the static user and the abnormal offline user. In some embodiments, the user table includes a correspondence between user information and an action, and whether a user has been authenticated is identified by using an action corresponding to user information. For example, if the action corresponding to the user information is "To CPF", it indicates that the user fails to be authenticated; or if the action corresponding to the user information is an action other than "To CPF", it indicates that the user has been authenticated. In some other embodiments, another attribute in the user table identifies whether a user is authenticated.

For example, a static user corresponds to a first attribute of the user table, and an attribute value of the first attribute is information about the static user. An abnormal offline user corresponds to a second attribute of the user table, and an attribute value of the second attribute is information about the abnormal offline user.

The CP device obtains the first policy in a plurality of manners. For example, a controller or network management personnel pre-configure the first policy on the CP device. For another example, the CP device combines the information about the first type of user with redirection information to obtain the first policy. For example, a static user table is configured on the CP device, and the static user table is combined with the redirection information to obtain the first policy. For example, the CP device generates an abnormal user table, and combines the abnormal user table with the redirection information to obtain the first policy. For how the CP device generates the abnormal user table, refer to descriptions corresponding to FIG. 12 and FIG. 13.

The CP device delivers a redirection policy to the UP device, so that the UP device can obtain the policy by communicating with the CP device. Therefore, in a packet access process, if a packet matches information about a user having a fixed IP address, the UP device performs an action of redirecting the packet.

This eliminates complex manual policy configuration operations and reduces configuration complexity.

S502: The UP device receives the first policy from the CP device, and stores the first policy.

Because the CP device delivers the information about the first type of user to the UP device, and indicates the UP device to match information in a packet with the information about the first type of user, a task of checking whether the packet comes from the user having the fixed IP address is sunk from the CP device to the UP device, so that a risk that the CP device is attacked is reduced.

In some embodiments, the CP device further sends a redirection parameter to the UP device. The redirection parameter includes at least one of GTP-U tunnel information or virtual extensible local area network (Virtual Extensible Local Area Network, Vxlan) tunnel information. In some embodiments, the Vxlan tunnel information identifies that a Vxlan tunnel is carried by using the IPv4 protocol. The Vxlan tunnel information includes an IPv4 address of the CP device. In some other embodiments, the Vxlan tunnel information identifies that a Vxlan tunnel is carried by using the IPv6 protocol. The Vxlan tunnel information includes an IPv6 address of the CP device.

It should be understood that whether the redirection parameter and the first policy are sent together or separately is not limited in this embodiment. In some embodiments, the CP device encapsulates the redirection parameter and the first policy in a same control packet, and sends the control packet to the UP device. The UP device receives the control packet, and obtains the redirection parameter and the first policy from the control packet. In some other embodiments, the CP device separately encapsulates the redirection parameter and the first policy in two control packets, where one control packet includes the first policy, and the other control packet includes the redirection parameter. The CP device sends the two control packets to the UP device. The UP device receives the two control packets, obtains the redirection parameter from the control packet carrying the redirection parameter, and obtains the first policy from the control packet carrying the first policy. In addition, when the redirection parameter and the first policy are separately sent, a time sequence of sending the redirection parameter and the first policy is not limited. For example, the CP device first sends the redirection parameter and then sends the first policy. For another example, the CP device first sends the first policy and then sends the redirection parameter.

The CP device delivers the redirection parameter to the UP device, so that the UP device can encapsulate a tunnel header based on the redirection parameter delivered by the CP device, to redirect the packet to the CP device, so as to avoid complex operations of manually configuring the redirection parameter, and reduce solution implementation complexity and configuration complexity.

In some embodiments, the CP device further sends an interface index to the UP device. The CP device notifies the UP device of an access interface of the user having the fixed IP address in a form of the interface index, so that the UP device can perform access authentication by determining whether an interface accessed by a terminal matches an interface index pre-delivered by the CP device. Because the interface accessed by the terminal represents a location of the terminal, a location factor is considered in an access authentication process, so that authentication security is improved.

S503: The UP device receives the packet.

For example, the packet is a data packet. For example, the packet includes but is not limited to at least one of an IPv4 data packet, an IPv6 data packet, an ARP packet, or an ND packet. The packet is also referred to as an IP data packet.

S504: The UP device matches second information included in the packet with information about a second type of user.

The second information is information obtained by the UP device based on the packet when the UP device detects whether the authentication succeeds. For example, the second information includes but is not limited to at least one of an IP address, a MAC address, a VLAN tag, and an interface index (namely, a port number of a port that is on the UP device and that is for receiving a packet). For example, the IP address included in the second information is a source IP address. For example, the source IP address included in the second information includes at least one of a source IPv6 address or a source IPv4 address. For example, the source IPv6 address included in the second information is an address carried in an SA field in an IPv6 basic header.

The second type of user is a user that has been authenticated, for example, a user on which binding authentication succeeds.

The UP device obtains the information about the second type of user in a plurality of manners. In some embodiments, the CP device sends the information about the second type of user to the UP device. The UP device receives the information about the second type of user, and locally stores the information about the second type of user. When receiving the packet, the UP device queries the stored information about the second type of user.

In some embodiments, the information about the second type of user is stored and transmitted in a form of a table. For example, the CP device sends an authentication binding table to the UP device, where the authentication binding table includes the information about the second type of user. For example, each entry (or referred to as each item) in the authentication binding table includes information about one second type of user. The UP device receives and stores the authentication binding table. When receiving the packet, the UP device queries the authentication binding table, and matches the second information included in the packet with the entry in the authentication binding table. If neither the second information included in the packet nor the information in each entry in the authentication binding table satisfies a second matching condition, S505 is performed.

S505: The UP device determines that the second information and the information about the second type of user do not satisfy the second matching condition.

The second matching condition is used to detect whether the packet is from a terminal of an authenticated user. The UP device determines whether the second information included in the packet matches the information about the second type of user. In different determining results, actions performed by the UP device are different. The following uses a case a and a case b as examples for description.

Case a: If the second information included in the packet and the information about the second type of user do not satisfy the second matching condition, it indicates that the packet is not from the terminal of the authenticated user. This case may be referred to as a failure in checking the authentication binding table. The UP device performs S506.

Optionally, the second matching condition includes that the source IP address in the packet is the same as the IP address of the first type of user, the port number of the port that is on the UP device and that is for receiving a packet is the same as a port number corresponding to the first type of user, and the VLAN tag in the packet is the same as the VLAN tag corresponding to the first type of user.

Case b: If the second information included in the packet and the information about the second type of user satisfy the second matching condition, it indicates that the packet is from the terminal of the authenticated user. This case may be referred to as success in checking the authentication binding table. When the packet is a data packet, the UP device forwards the data packet; when the packet is an ARP packet, the UP device processes the ARP packet according to the ARP protocol; or when the packet is an ND packet, the UP device processes the ND packet according to the ND protocol.

That the second matching condition is not satisfied includes a plurality of cases. In some embodiments, that the second matching condition is not satisfied includes but is not limited to the following case (A), case (B), or case (C).
Case (A): The source IP address in the packet is different from the IP address of the first type of user.
Case (B): The port number of the port that is on the UP device and that is for receiving a packet is different from the port number corresponding to the first type of user.
Case (C): The VLAN tag in the packet is different from the VLAN tag corresponding to the first type of user

S506: The UP device matches, according to the first policy, the first information included in the packet with the information about the first type of user.

Because the CP device delivers the first policy to the UP device in advance, the UP device performs S506 and S507 according to the first policy. Specifically, the UP device performs, based on the information about the first type of user carried in the first policy, the step of matching the first information included in the packet with the information about the first type of user. When the first information and the information about the first type of user satisfy the first matching condition, the UP device performs a step of sending the packet to the CP device included in the BNG.

The first information is information extracted from the packet by the UP device when the UP device detects whether the packet is from the user having the fixed IP address. For example, the first information includes but is not limited to at least one of an IP address, a MAC address, a VLAN tag, and an interface index (namely, a port number of a port), on the UP device, for receiving a packet. For example, the IP address included in the first information is a source IP address. For example, the source IP address included in the first information includes at least one of a source IPv6 address or a source IPv4 address. For example, the source IPv6 address included in the first information is an address carried in an SA field in an IPv6 basic header.

The interface index identifies an access interface (Access Interface) on the UP device. The access interface is an interface accessed by a terminal of the first type of user. The VLAN tag is, for example, a single VLAN tag (for example, an outer VLAN tag or an inner VLAN tag) or an inner VLAN tag and an outer VLAN tag.

It should be understood that whether the first information is the same as the second information is not limited in this embodiment. In some embodiments, the second information is the same as the first information. In some other embodiments, the second information is different from the first information. In some other embodiments, the second information and the first information are partially the same and partially different.

The UP device obtains the information about the first type of user in a plurality of manners. In some embodiments, the CP device sends the information about the first type of user to the UP device. The UP device receives the information about the first type of user, and locally stores the information about the first type of user. When receiving the packet, the UP device queries the stored information about the first type of user.

It should be understood that whether the user table and the authentication binding table are disaggregated into different tables or combined into a same table is not limited in this embodiment. In some embodiments, the user table and the authentication binding table are two separate tables. In some embodiments, the user table and the authentication binding table belong to a same table. For example, the user table includes two attributes, and the two attributes respectively correspond to a user having a fixed IP address and an authenticated user. For example, a user having a fixed IP address corresponds to a first attribute of the user table, and an attribute value of the first attribute is information about the user having the fixed IP address. An authenticated user corresponds to a second attribute of the user table, and an attribute value of the second attribute is information about the authenticated user.

S507: If the first information and the information about the first type of user satisfy the first matching condition, the UP device sends the packet to the CP device included in the BNG.

That the UP device sends the packet to the CP device may also be referred to as that the UP device redirects the packet to the CP device.

The first matching condition is used to detect whether the packet is from the terminal of the first type of user. For example, the first matching condition is used to detect whether the packet is from a terminal of a static user. For another example, the first matching condition is used to detect whether the packet is from a terminal of an abnormal offline user. It should be understood that whether the first matching condition is the same as the second matching condition is not limited in this embodiment. In some embodiments, the second matching condition is the same as the first matching condition. In some other embodiments, the second matching condition is different from the first matching condition. In some other embodiments, the second matching condition and the first matching condition are partially the same and partially different. For example, the second matching condition is that the IP address, the port number, and the VLAN tag all need to be matched. The first matching condition is that the IP address needs to be matched, and whether matching of the port number of the port that is on the UP device and that is for receiving a packet and matching of the VLAN tag succeed is not limited.

The UP device determines whether the first information included in the packet and the information about the first type of user satisfy the first matching condition. In different determining results, actions performed by the UP device are different. The following uses a case a and a case b as examples for description.

Case a: If the first information included in the packet and the information about the first type of user satisfy the first matching condition, it indicates that the packet is from the terminal of the first type of user. This case may be referred to as matching success. In this case, the UP device performs S507 to send the packet to the CP device.

That the first matching condition is satisfied includes a plurality of cases. In some embodiments, that the first matching condition is satisfied means at least the IP address is matched, and optionally the port number of the port that is on the UP device and that is for receiving a packet or the VLAN tag is further matched. For example, the first matching condition includes but is not limited to any one of the following condition (1) to condition (4). Optionally, manners of performing matching by using the condition (1) to the condition (3) are referred to as fuzzy matching manners. A manner of performing matching by using the following condition (4) is referred to as a strict matching manner.
Condition (1): The source IP address in the packet is the same as the IP address of the first type of user.
Condition (2): The source IP address in the packet is the same as the IP address of the first type of user, and the number of the port that is on the UP device and that is for receiving a packet is the same as the port number corresponding to the first type of user.
Condition (3): The source IP address in the packet is the same as the IP address of the first type of user, and the VLAN tag in the packet is the same as the VLAN tag corresponding to the first type of user.
Condition (4): The source IP address in the packet is the same as the IP address of the first type of user, the port number of the port that is on the UP device and that is for receiving a packet is the same as the port number corresponding to the first type of user, and the VLAN tag in the packet is the same as the VLAN tag corresponding to the first type of user.

In some embodiments, the first matching condition is determined based on a configuration operation. In other words, specific information in the packet and specific information about the first type of user that are used for matching are determined by a configuration operation of a controller or network management personnel. For example, if it is pre-configured that port number matching or VLAN tag matching is enabled, the UP device uses the port number matching or the VLAN tag matching; or if it is pre-configured that port number matching or VLAN tag matching is not enabled, the UP device does not use the port number matching or the VLAN tag matching.

In some embodiments, different first matching conditions are satisfied in different scenarios. For example, in a static user scenario, that the first matching condition is satisfied is that any one of the foregoing condition (1) to the condition (3) is satisfied. For example, in an abnormal offline user scenario, that the first matching condition is satisfied is that the foregoing condition (4) is satisfied.

In a static user access scenario, after receiving a packet, the UP device matches information in the packet with information about a static user. If the matching succeeds, the UP device sends the packet to the CP device. Because a task of checking whether the packet comes from the static user is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the static user, a risk that the CP device is attacked by the malicious IP packet flow is reduced, and network security of the CP device is improved.

In an abnormal offline user access scenario, after receiving a packet, the UP device matches information in the packet with information about an abnormal offline user. If the matching succeeds, the UP device sends the packet to the CP device. Because a task of checking whether the packet comes from the abnormal offline user is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the abnormal offline user, a risk that the CP device is attacked by the malicious IP packet flow is reduced, and network security of the CP device is improved.

Case b: If the first information included in the packet and the information about the first type of user do not satisfy the first matching condition, it indicates that the packet is not from a terminal of the first type of user. This case may be referred to as a matching failure. The UP device discards the packet, but does not send the packet to the CP device. In this way, performance overheads and a waste of processing resources caused by access processing on the packet by the CP device are avoided. Especially, when the packet is a malicious packet used to perform a network attack, because information included in the malicious packet does not match the information about the first type of user, the UP device discards the malicious packet, so that transmission of the malicious packet is blocked at the UP device, and the malicious packet does not reach the CP device through the UP device. Therefore, the CP device is prevented from performing an access processing action on the malicious packet, and a risk that the CP device is under the network attack is reduced.

The UP device redirects a packet to the CP device in a plurality of manners. In some embodiments, a tunnel is established between the UP device and the CP device. A start point of the tunnel is the UP device, and an end point of the tunnel is the CP device. The UP device encapsulates a packet into a format corresponding to the tunnel, and sends the encapsulated packet to the CP device, so that the packet is transmitted to the CP device through the tunnel.

When the tunnel is used, the UP device encapsulates the packet in a plurality of implementations. For example, the UP device adds a tunnel header to a packet to obtain the encapsulated packet. The encapsulated packet includes the tunnel header and the packet received by the UP device from a terminal. The tunnel header is located at an outer layer, and the packet received by the UP device from the terminal is located at an inner layer. A source address field in the tunnel header carries an IP address of the UP device, and a destination address field in the tunnel header carries an IP address of the CP device. Because the tunnel header in which the destination address is the CP device is encapsulated at an outer layer of the packet, the packet is routed and forwarded to the CP device through an intermediate node. Therefore, the packet can be redirected from the original destination node to the CP device. Optionally, the UP device not only adds a tunnel header, but also adds an extension header. In this manner, the encapsulated packet includes a tunnel header, an extension header, and a packet received by the UP device from a terminal.

The UP device redirects a packet to the CP device through a specific type of tunnel in a plurality of manners. For example, the UP device redirects a packet to the CP device through a GTP-U tunnel or a Vxlan tunnel. In the following descriptions, a manner I is used to describe, by using an example, how to send the packet through the GTP-U tunnel, and a manner II is used to describe, by using an example, how to send the packet through the Vxlan tunnel.

Manner I: The UP device adds a GTP-U header to a packet, and sends the packet to which the GTP-U header is added.

The GTP-U header is an example of a tunnel header when a tunnel type is a GTP-U tunnel. In some embodiments, the UP device adds the GTP-U header, and further adds a network service header (network service header, NSH), and sends the packet to which the GTP-U header and the NSH are added.

In some embodiments, the manner I is implemented by using a redirection parameter pre-delivered by the CP device. Specifically, the redirection parameter delivered by the CP device to the UP device includes GTP-U tunnel information, and the UP device generates the GTP-U header based on the GTP-U tunnel information, and adds the GTP-U header to the packet. In some other embodiments, the GTP-U tunnel information used by the UP device is not delivered by the CP device, but is pre-configured on the UP device in advance. How the UP device obtains the GTP-U tunnel information is not limited in this embodiment.

Manner II: The UP device adds a Vxlan header to a packet, and sends the packet to which the Vxlan header is added.

The Vxlan header is an example of a tunnel header when a tunnel type is a Vxlan tunnel. In some embodiments, the UP device adds the Vxlan header, and further adds a CU extension header, and sends a packet to which the Vxlan header and the CU extension header are added.

The Vxlan header includes but is not limited to a standard Vxlan header, an overlay (Overlay) header extended according to the Vxlan protocol, and the like. For example, the Vxlan header is a Vxlan generic protocol encapsulation (Vxlan Generic Protocol Encapsulation, Vxlan-GPE) header or a generic network virtualization encapsulation (Generic Network Virtualization Encapsulation, GENEVE) header. When Vxlan-GPE is used, the CP device adds the Vxlan header and the CU extension header to the packet. Header overheads are low, and network resources occupied for packet transmission and device performance overheads are reduced.

In some embodiments, the manner I is implemented by using a redirection parameter pre-delivered by the CP device. Specifically, the redirection parameter delivered by the CP device to the UP device includes Vxlan tunnel information, and the UP device generates the Vxlan header based on the Vxlan tunnel information, and adds the Vxlan header to the packet. In some other embodiments, the Vxlan tunnel information used by the UP device is not delivered by the CP device, but is pre-configured on the UP device in advance. How the UP device obtains the Vxlan tunnel information is not limited in this embodiment.

In some embodiments, the UP device performs rate limiting control when redirecting the packet to the CP device. For example, a rate threshold for sending a packet is preset on the UP device, and whether a rate for sending a packet is greater than the rate threshold is monitored. If the rate for sending a packet is greater than the rate threshold, a to-be-sent packet is buffered in a manner such as queuing, so that the rate for sending a packet is controlled to be less than or equal to the rate threshold.

S508: The CP device receives the packet from the UP device.

S509: The CP device performs access processing based on the packet.

For example, the CP device generates an authentication request, where the authentication request includes user information, where the user information includes, for example, a user name and a password, and may further include the first information or the second information. The CP device sends the authentication request to an authentication server. The authentication server receives the authentication request, and authenticates the user information carried in the authentication request. The authentication server generates an authentication response based on an authentication result, and sends the authentication response to the CP device. The CP device receives the authentication response from the authentication server.

When the authentication result is that the authentication succeeds, the authentication response sent by the authentication server indicates that the authentication succeeds. The CP device allows the user to access a network based on the authentication response, and performs S510, to indicate the UP device to forward the packet for the user. In addition, the CP device stores the second information as the information about the second type of user. For example, the CP device stores the second information in the authentication binding table.

When the authentication result is that the authentication fails, the authentication response sent by the authentication server indicates that the authentication fails. The CP device rejects access of the user to the network based on the authentication response.

S510: The CP device sends a second policy to the UP device.

The second policy indicates to forward the packet when the first information included in the packet and the information about the first type of user satisfy the first matching condition. Alternatively, the second policy indicates to forward the packet when the second information included in the packet and the information about the second type of user satisfy the second matching condition. A matching rule in the second policy includes the information about the first type of user or the information about the second type of user. An action identifier in the second policy identifies a forwarding action. For example, the second policy includes "Key=IP+MAC+VLAN+interface, action=forward".

S511: The UP device receives the second policy from the CP device, and stores the second policy.

S512: The UP device receives the packet.

S513: The UP device forwards the packet according to the second policy.

S514: The CP device detects that the terminal of the first type of user is in an offline state.

For example, if the CP device detects that an interface fault or a board fault occurs on the UP device, the CP device performs offline processing on the terminal connected through the interface or the board.

S515: The CP device sends a third policy to the UP device.

The third policy indicates to redirect the packet to the CP device when the first information included in the packet and the information about the first type of user satisfy the first matching condition. Alternatively, the third policy indicates to redirect the packet to the CP device when the second information included in the packet and the information about the second type of user satisfy the second matching condition. A matching rule in the third policy includes the information about the first type of user or the information about the second type of user. An action identifier in the third policy identifies a redirection action. For example, the third policy includes "Key=IP+MAC+VLAN+interface, action=to CPF".

S516: The UP device receives the third policy from the CP device, and stores the third policy.

S517: The UP device receives the packet.

S518: The UP device sends the packet to the CP device according to the third policy.

S519: The CP device detects that configuration information of the first type of user is deleted or a lease period of the first type of user expires.

S520: The CP device sends a deletion request to the UP device, where the deletion request indicates to delete the information about the first type of user.

There are a plurality of scenarios in which the CP device sends the deletion request. In some embodiments, the CP device detects that the configuration information of the first type of user is deleted, and under triggering of the deletion of the configuration information, the CP device generates the deletion request, and sends the deletion request to the UP device, where the deletion request indicates to clear information about the user whose configuration information is deleted. For example, the controller or the network management personnel deletes configuration information of a static user on the CP device, and the CP device generates a deletion request for the static user. In some other embodiments, the CP device starts a timer, and determines whether recorded duration exceeds the lease period of the first type of user. If the CP device detects that the lease period of the first type of user expires, the CP device generates the deletion request under triggering of the deletion due to lease period expiration and sends the deletion request to the UP device, where the deletion request indicates to clear information about the user whose lease period expires. Lease period expiration is referred to as aging.

S521: The UP device receives the deletion request from the CP device.

S522: The UP device deletes the information about the first type of user in response to the deletion request.

For example, the UP device deletes the static user table to complete an action of clearing the static user. For example, the UP device deletes the abnormal user table to complete an action of clearing the abnormal offline IPoE user. In a scenario in which a configuration of the static user is deleted, a lease period of the abnormal offline user expires, or the like, the CPF indicates the UPF to clear the information about the user having the fixed IP address, so as to release, in a timely manner when the information about the user is invalid, storage space occupied on the UPF by the information about the user.

This embodiment provides a method for preventing the CP device from being attacked in a scenario in which a BNG with CU disaggregated performs access authentication. When receiving the packet, the UP device matches the information in the packet with the information about the user having the fixed IP address, and if the matching succeeds, the UP device sends the packet to the CP device. Because a task of checking whether the packet comes from the user having the fixed IP address is sunk from the CP device to the UP device, resource overheads caused by checking the packet by the CP device are avoided, and load of the CP device is reduced. Especially, if a malicious IP packet flow initiates a network attack, because the CP device does not need to perform a task of checking whether the malicious IP packet flow comes from the user having the fixed IP address, a risk that the CP device is attacked by the malicious IP packet flow is reduced, and network security of the CP device is improved.

The following uses the method 600 and the method 700 as examples to describe how to implement the method 500 by using PFCP. In other words, method procedures described in the method 600 and the method 700 are about how to enable a UP device to execute a security policy in advance according to PFCP. It should be understood that in the method 600 and the method 700, for steps similar to those in the method 500, refer to the method 500. Details are not described in the method 600 and the method 700. In addition, for implementation details of PFCP in the method 600 and the method 700, refer to the foregoing descriptions of PFCP.

Some terms in PFCP are used in the following expressions of the method 600 and the method 700. For example, in the following method 600 and method 700, a CP device is referred to as a CPF, a UP device is referred to as a UPF, a policy is referred to as a PDA, a rule in the policy is referred to as PDI, and an action identified in the policy is referred to as a PA.

In the following method 600, a message in the PCFP protocol is reused to transfer information exchanged between the CP device and the UP device. The reused message is, for example, a node message or a session message (Session message) in PFCP. In the following method 600, a static user table or an abnormal offline IPoE user table is delivered to the UPF by reusing a session message shown in Table 11.

**Table 11**

| Message type value (decimal) | Message |
|---|---|
| 50 | PFCP session establishment request (PFCP Session Establishment Request) |
| 51 | PFCP session establishment response (PFCP Session Establishment Response) |
| 52 | PFCP session modification request (PFCP Session Modification Request) |
| 53 | PFCP session modification response (PFCP Session Modification Response) |

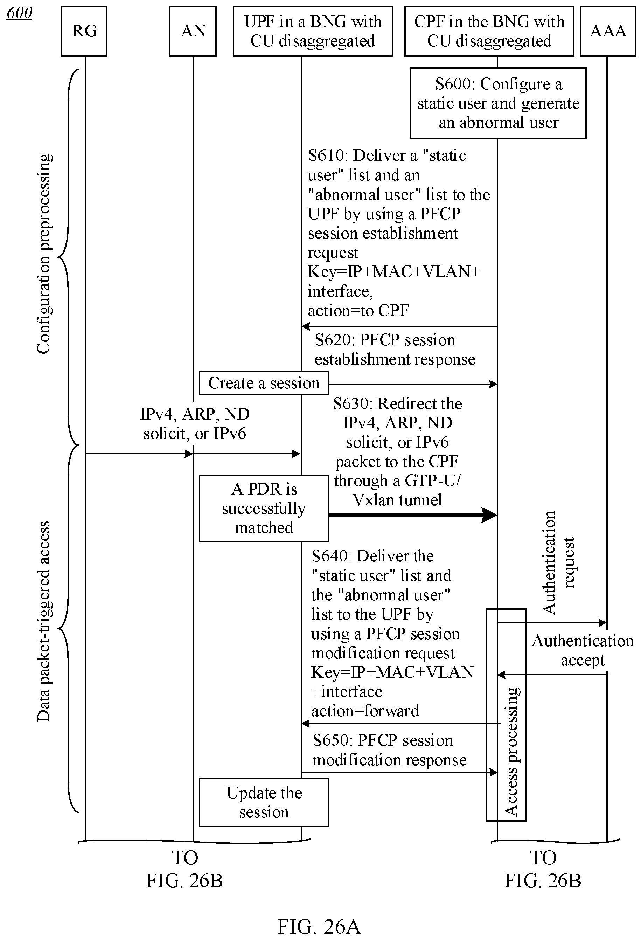

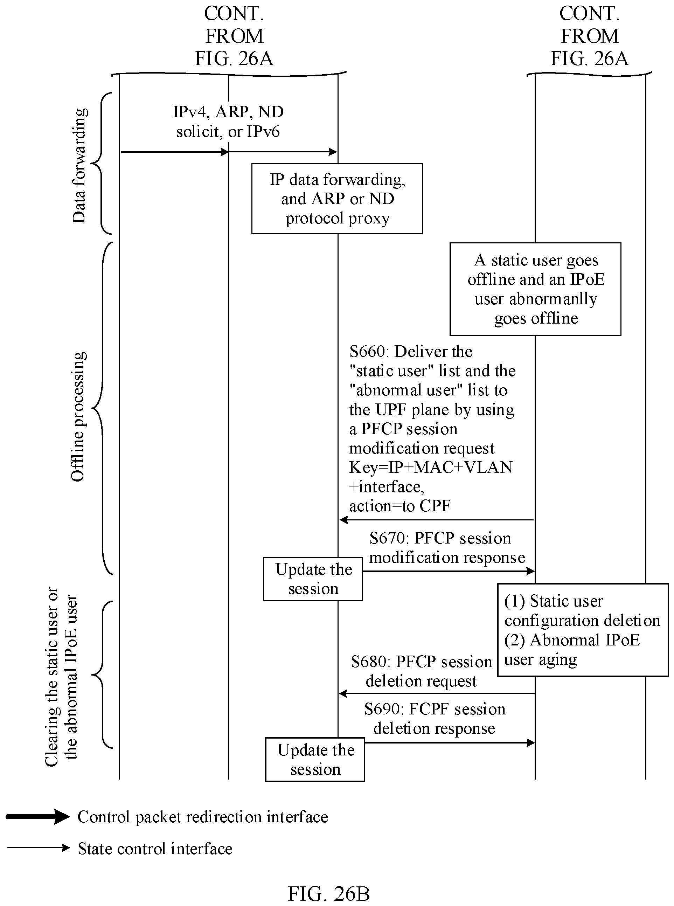

FIG. 26A and FIG. 26B are a flowchart of a packet processing method 600 according to an embodiment of this application. The method shown in FIG. 26A and FIG. 26B is about how to reuse a session message in PFCP to deliver a static user table or an abnormal offline IPoE user table to a UPF. Optionally, each PFCP session corresponds to a static user or an abnormal offline IPoE user.

For example, the method 600 includes S600 to S690. The method 600 includes four phases. A phase 1 is a procedure before authentication succeeds, and the phase 1 includes S610 to S630. A phase 2 is a procedure in which the authentication succeeds. The phase 2 includes S640 and S650. A phase 3 is a procedure in which a terminal goes offline. The phase 3 includes S660 and S670. A phase 4 is a procedure of static user configuration deletion or abnormal IPoE user aging (to be specific, a user does not go online within a lease period). The phase 4 includes S680 and S690.

In some embodiments, a state control interface and a control packet redirection interface in PFCP are extended to transmit signaling in the method 600. Specifically, in the method 600, various packets exchanged between a CPF and the UPF are transmitted by using the state control interface and the control packet redirection interface. In S610, a PFCP session establishment request is delivered from the CPF to the UPF through the state control interface. In S620, a PFCP session establishment response is sent from the UPF to the CPF through the state control interface. In S630, a packet that triggers access is sent from the UPF to the CPF through the control packet redirection interface. In S640, a PFCP session modification request is delivered from the CPF to the UPF through the state control interface. In S650, the PFCP session modification response is sent from the UPF to the CPF through the state control interface. In S660, the PFCP session modification request is delivered from the CPF to the UPF through the state control interface. In S670, the PFCP session modification response is sent from the UPF to the CPF through the state control interface. In S680, a PFCP session deletion request is delivered from the CPF to the UPF through the state control interface. In S690, the PFCP session deletion response is sent from the UPF to the CPF through the state control interface.

S600: Configure a static user table on the CPF; or the CPF generates an abnormal offline IPoE user table.

S610: The CPF sends the PFCP session establishment request to the UPF.

Specifically, the CPF generates the PFCP session establishment request, and sends the PFCP session establishment request to the UPF, to indicate the UPF to create a session message, so that the UPF redirects a packet to the CPF after matching an IP flow of the session message. The PFCP session establishment request carries a PDR, and the PDR is the first policy in the method 500. The PDR in the PFCP session establishment request includes PDI and a PA. The PDI includes a static user table and an abnormal user table. Content of the PFCP session establishment request message (PFCP session establishment request) includes "Key=IP+MAC+VLAN+interface, action=to CPF". "Key=IP+MAC+VLAN+interface" means that key values to be matched include a source IP address of the packet, a source MAC address of the packet, a VLAN tag (single-layer or double-layer) of the packet, and an interface (or port) for receiving the packet. "action=to CPF" means that the action is sending to the CPF. "action=to CPF" is one of forwarding actions defined in PFCP.

The CPF reuses a PFCP session message such as the PFCP session establishment request, and reuses a mechanism of delivering a PDR by using a PFCP session in PFCP, to deliver information about a user having a fixed IP address and a redirection action to the UPF, so that a solution of executing a security policy on the UPF is more smoothly integrated with a PFCP architecture, and use of a communication mechanism implementation solution in PFCP is facilitated, so that solution implementation complexity and configuration complexity are reduced.

S620: The UPF receives the PFCP session establishment request, generates the PFCP session establishment response, and sends the PFCP session establishment response to the CPF.

In addition, the UPF creates at least one PFCP session. Specifically, the UPF stores a session table. After receiving information about a first type of user from the CPF, the UPF stores information about each user in the information about the first type of user, in a PFCP session corresponding to the user. For example, the UPF stores information about each static user in the static user table, in a PFCP session corresponding to the static user in the session table. For example, the UPF stores information about each abnormal offline user in the abnormal offline user table, in a PFCP session corresponding to the abnormal offline user in the session table.

S630: The UP device receives the packet, and matches, based on the PDA, first information included in the packet with the information about the first type of user. If the first information and the information about the first type of user in the PDI satisfy a first matching condition, the UP device sends, based on the packet action PA corresponding to the PDI, the packet to a CP device included in a BNG.

In a forwarding phase, when receiving the packet, the UPF extracts a parameter from the packet and matches the parameter in the packet with the static user table and the abnormal user table that are stored in the session table. If the matching succeeds, the UPF redirects the packet to the CPF through a GTP-U or Vxlan tunnel. The parameter that is of the packet and that is used by the UPF includes an IPv4 address or an IPv6 address, and optionally further includes a VLAN tag or an interface index corresponding to an access interface. The PA indicates to redirect to the CP device.

The CPF reuses a PFCP session processing mechanism in PFCP, uses the information about the first type of user as a match field in the PDI, and uses the redirection action as the PA performed when the PDI is hit, so that a solution of executing a security policy on the UPF is more smoothly integrated with a PFCP architecture, and use of a communication mechanism implementation solution in PFCP is facilitated, so that solution implementation complexity and configuration complexity are reduced.

S640: The CPF completes authentication on a terminal, and the CPF sends the PFCP session modification request to the UPF.

After receiving the packet, the CPF performs access processing on the packet. For example, the CPF sends an authentication request to an AAA server, and the AAA server receives the authentication request, performs authentication, and returns an authentication accept (Accept) message to the CPF. After receiving the authentication accept, if the CPF determines that the authentication succeeds, the CPF generates the PFCP session modification request, and sends the PFCP session modification request to the UPF. The PFCP session modification request carries a PDR, and the PDR is the second policy in the method 500. Specifically, the PDR in the PFCP session modification request includes PDI and a PA.

The PDI carried in the PFCP session modification request includes a static user table and an abnormal user table. In a forwarding phase, the UPF extracts a parameter from the packet and matches the parameter in the packet with the static user table and the abnormal user table in the PDI. The parameter that is of the packet and that is used by the UPF includes an IPv4 address, an IPv6 address, a VLAN tag, and an interface index corresponding to an access interface. The PA indicates to forward the packet. The CPF sends the PFCP session modification request to the UPF, to deliver the static user table and the abnormal user table to the UPF. The PFCP session modification request includes "Key=IP+MAC+VLAN+interface, action=forward". The CPF modifies a session by using the PFCP session modification request, and indicates the UPF to perform forwarding after matching an IP flow of the session.

"Key=IP+MAC+VLAN+interface" means that key values to be matched include a source IP address of the packet, a source MAC address of the packet, a VLAN tag (single-layer or double-layer) of the packet, and an interface (or port) for receiving the packet. "action=forward" indicates that an action is forwarding. "action=forward" is one of forwarding actions defined in PFCP.

S650: The UPF receives the PFCP session modification request, generates the PFCP session modification response, and sends the PFCP session modification response to the CPF. In addition, the UPF updates the session in the session table.

S660: When detecting an interface fault or a board fault of the UPF, the CPF performs offline processing on the terminal. The CPF generates the PFCP session modification request, and sends the PFCP session modification request to the UPF.

The PFCP session modification request carries a PDR, and the PDR is the third policy in the method 500. For example, the PFCP session modification request includes a static user table and an abnormal user table. The PFCP session modification request includes "Key=IP+MAC+VLAN+interface, action=to CPF".

S670: The UPF receives the PFCP session modification request, generates the PFCP session modification response, and sends the PFCP session modification response to the CPF.

In S660 and S670, the CPF modifies a session by using the PFCP session modification message, and indicates the UPF to forward the packet to the CPF after matching an IP flow of the session.

S680: When the CPF detects static user configuration deletion or abnormal IPoE user aging (where an IPoE user does not go online within a lease period), the CPF generates the PFCP session deletion request, and sends the PFCP session deletion request to the UPF.

S690: The UPF receives the PFCP session deletion request, generates the PFCP session deletion response, and sends the PFCP session deletion response to the CPF. In addition, the UPF updates the session.

The PFCP session deletion request is an example of the deletion request in the method 500. The CPF reuses a PFCP session message such as the PFCP session deletion request, and reuses a PFCP session deletion mechanism in PFCP, to clear the information about the user having the fixed IP address from the UPF, so that a solution of executing a security policy on a UPF is more smoothly integrated with a PFCP architecture, and use of a communication mechanism implementation solution in PFCP is facilitated, so that solution implementation complexity and configuration complexity are reduced.

By performing S680 and S690, the CPF modifies the session by using the PFCP session deletion request message, and indicates the UPF to forward the packet to the CPF after matching the IP flow of the session.

The following describes IEs carried in the PFCP session establishment request in the method 600.

Table 12 shows meanings of identifiers used in a table including IEs in the method 600.

**Table 12**

| Classification of whether an IE appears in the method 600 | Descriptions |
|---|---|
| Mandatory (M) | Mandatory |
| Conditional (C) | The IE needs to be carried if a specific condition is satisfied . |
| Conditional-Optional (CO) | The IE may be carried if a specific condition is satisfied. |
| Optional (O) | Whether the IE is carried is optional. |

Table 13 describes several types of IEs in the method 600 by using examples.

**Table 13**

| IE | P | Condition/Comment | IE type |
|---|---|---|---|
| Node ID | M | Device number of the CPF | Node ID (existing IE) |
| CPF-SEID | M | Session ID allocated by the CPF, where the ID is unique. | F-SEID (existing IE) |
| Create PDR | M | Create packet detection rule | Create PDR (existing IE) |
| Create FAR | M | Create forwarding rule | Create FAR (existing IE) |
| Create Traffic Endpoint | M | Data flow termination information, which identifies a piece of flow information. | Create Traffic Endpoint (existing IE) |

Referring to the following Table 14, Table 14 is an example of a Create PDR IE.

**Table 14**

| Octets 1 and 2 | Create PDR IE type=1 (decimal) | | |
|---|---|---|---|
| Octets 3 and 4 | Length=n | | |
| IE | P | Condition/Comment | IE type |
| PDR ID | M | ID of a packet detection rule, where the ID is unique and is allocated by the CPF. | PDR ID (existing IE) |
| Precedence | M | Priority of the rule. A larger value indicates a higher priority. | Precedence |
| PDI | M | Packet detection entry. There may be a plurality of entries. If a terminal has two static IPv4/IPv6 IP addresses, two pieces of PDI can be carried. | PDI (existing IE) |

Table 15 is an example of a PDI IE.

**Table 15**

| Octets 1 and 2 | PDI IE type=2 (decimal) | | |
|---|---|---|---|
| Octets 3 and 4 | Length=n | | |
| IE | P | Condition/Comment | IE type |
| Traffic Endpoint ID | M | Traffic termination ID. ID that is in a create traffic endpoint IE and that indicates traffic termination information. | Traffic Endpoint ID |

Table 16 is an example of a Create Traffic Endpoint IE.

**Table 16**

| Octets 1 and 2 | Create Traffic Endpoint IE type=127 (decimal) | | |
|---|---|---|---|
| Octets 3 and 4 | Length=n | | |
| IE | P | Condition/Comment | IE type |
| Traffic Endpoint ID | M | Traffic termination ID | Traffic Endpoint ID |
| UE IP Address | M | IP address of a user terminal | UE IP address (existing IE) |
| The following IEs are newly extended IEs (depending on whether related parameters are configured): | | | |
| MAC address | CO | MAC address of a terminal A static user depends on this configuration. This parameter is mandatory for an abnormal IPoE user. | MAC address (existing IE) |
| Ethertype | CO | Identifies a data type indicated in an Ethernet packet. | Ethertype (existing IE) |
| | | Required indications: | |
| | | 0x0800: IPv4 data packet | |
| | | 0x0806: ARP packet | |
| | | 0x86DD: IPv6 data packet | |
| C-TAG | CO | Outer VLAN. | C-TAG (existing IE) |
| | | MAC address of the terminal. A static user depends on this configuration. This parameter is mandatory for an abnormal IPoE user. | |
| S-TAG | CO | Inner VLAN. | S-TAG (existing IE) |
| | | MAC address of the terminal. A static user depends on this configuration. This parameter is mandatory for an abnormal IPoE user. | |
| Access Interface | CO | Interface for terminal access. The interface is identified by using an interface index. | If-Index (optionally, the IE is extended, or an IE logical port extended by the BBF in TR-459 is reused) |

Table 17 is an example of content of a Create FAR IE.

**Table 17**

| Octets 1 and 2 | Create FAR IE type=3 (decimal) | | |
|---|---|---|---|
| Octets 3 and 4 | Length=n | | |
| IE | P | Condition/Comment | IE type |
| FAR ID | M | ID of a forwarding action | FAR ID (existing IE) |
| Redirect Parameters of CPF | M | Parameters for redirecting a packet to the CPF | Redirect Parameters (where the IE needs to be extended) |

Table 18 is an example of IEs carried in a PFCP session establishment response.

**Table 18**

| IE | P | Condition/Comment | IE type |
|---|---|---|---|
| Node ID | M | Device number of the UPF | Node ID |
| Cause | M | Processing result | Cause |

Table 19 is an example of IEs carried in a PFCP session modification request.

**Table 19**

| IE | P | Condition/Comment | IE type |
|---|---|---|---|
| Node ID | M | Device number of the CPF | Node ID (existing IE) |
| CPF-SEID | M | Session ID allocated by the CPF, where the ID is unique. | F-SEID (existing IE) |
| Modify PDR | M | Modify packet detection rule | Modify PDR (existing IE) |
| Modify FAR | M | Modify forwarding rule | Modify FAR (existing IE) |

In addition, content of the Modify PDR IE is the same as that of the Create PDR IE. Content of the Modify FAR IE is the same as that of the Create FAR IE. The PFCP session deletion request message does not carry any special IE. The session ID in the message header is reused to indicate the UPF to delete the corresponding session.

In some embodiments, the interface index is carried by extending an IE of a new type. For example, an IE carrying the interface index is referred to as an interface index (interface index, If-index) IE. An IE type of the interface index IE is a new extended IE type. For example, the IE type of the interface index IE is denoted as a first IE type. The CPF carries the interface index in an IE having the first IE type, and the CPF sends the IE having the first IE type to the UPF, so as to deliver the interface index. In some embodiments, the IE having the first IE type is an embedded IE.

The interface index IE may be transmitted by using a PFCP message. For example, the CPF includes the IE having the first IE type in a first PFCP message, and the first PFCP message sent by the CPF includes the IE having the first IE type. The first PFCP message is a PFCP session establishment request, or the first PFCP message is a PFCP static session establishment request. The first IE type identifies that the IE includes the interface index. In some embodiments, a value of the first IE type is greater than 32768. Specifically, it is stipulated in PFCP that a value range of the IE type from 32768 to 65535 is used as a vendor extension part, and a value may be selected from 32768 to 65535 as the value of the first IE type. For example, the interface index IE is shown in the following Table 20. NN in the first and the second octets in Table 20 is a decimal value greater than 32768. 2100 in the fifth and sixth octets in Table 20 is an example of a vendor number in a decimal format. An interface index (interface index) in the seventh to tenth octets in Table 20 is encoded as an unsigned 32-bit integer (Unsigned 32 binary integer value).

**Table 20**

| | Bits | | | | | | | |
|---|---|---|---|---|---|---|---|---|
| Octets | 8 | 7 | 6 | 5 | 4 | 3 | 2 | 1 |
| 1 to 2 | Type = NN decimal | | | | | | | |
| 3 to 4 | Length=n | | | | | | | |
| 5 to 6 | Vendor number (2100) | | | | | | | |
| 7 to 10 | Interface index. | | | | | | | |

The new type of IE is extended to carry the interface index, so that a format of the IE in the PFCP message is reused to deliver the interface index to the UPF. In this way, the solution of executing the security policy on the UPF is more smoothly integrated with the PFCP architecture, and the solution implementation complexity and the configuration complexity are reduced.

In some embodiments, a redirection parameter is carried by extending an IE of a new type. For example, an IE that carries the redirection parameter is referred to as a redirection parameter IE (Redirect Parameters IE). An IE type of the redirection parameter IE is a new IE type. For example, the IE type of the redirection parameter IE is denoted as a second IE type. The CPF includes the redirection parameter in an IE having the second IE type, and the CPF sends the IE having the second IE type to the UPF, so as to deliver the redirection parameter. In some embodiments, the IE having the second IE type is a grouped IE (grouped IE).

The new type of IE is extended to carry the redirection parameter, so that a format of the IE in the PFCP message is reused to deliver the redirection parameter to the UPF, so that the solution implementation complexity and the configuration complexity are reduced.

The redirection parameter IE may be transmitted by using a PFCP message. For example, the CPF includes the IE having the second IE type in the first PFCP message, and the first PFCP message sent by the CPF includes the IE having the second IE type. For example, the first PFCP message carrying the redirection parameter IE is a PFCP session establishment request. For another example, the first PFCP message carrying the redirection parameter IE is a PFCP static session establishment request. The second IE type identifies that the IE includes the redirection parameter. In some embodiments, a value of the second IE type is greater than 32768.

In some embodiments, the redirection parameter IE includes at least one IE. Different IEs included in the redirection parameter IE have different IE types. Each IE included in the redirection parameter IE is used to carry information about a tunnel type. For example, one IE included in the redirection parameter IE is used to carry Vxlan tunnel information, and another IE included in the redirection parameter IE is used to carry GTP-U tunnel information. For example, the redirection parameter IE is shown in Table 21. NN in the first and the second octets in Table 21 is a decimal value greater than 32768. 2100 in the fifth and sixth octets in Table 21 is an example of a vendor number in a decimal format.

**Table 21**

| Octets 1 and 2 | Redirection parameter IE type=XX (decimal) | | |
|---|---|---|---|
| Octets 3 and 4 | Length=n | | |
| Octets 5 and 6 | Vendor number=2100 | | |
| IE | P | Condition/Comment | IE type |
| Peer F-TEID | O | GTP-U tunnel information | F-TEID (existing IE) |
| Vxlan Tunnel Info | O | Vxlan tunnel information | Vxlan info (the IE needs to be extended) |

In some embodiments, a new type of IE is extended to carry the Vxlan tunnel information. For example, an IE that carries the Vxlan tunnel information is referred to as a Vxlan information IE (Vxlan Info IE). An IE type of the Vxlan information IE is a new extended IE type. For example, the IE type of the Vxlan information IE is denoted as a third IE type. The CPF includes the Vxlan tunnel information in an IE having the third IE type, and the CPF sends the IE having the third IE type to the UPF, so as to deliver the Vxlan tunnel information. In some embodiments, the IE having the third IE type is an embedded IE. The third IE type identifies that the IE includes the Vxlan tunnel information. For example, the Vxlan information IE is shown in the following Table 22.

**Table 22**

| | Bits | | | | | | | |
|---|---|---|---|---|---|---|---|---|
| Octet | 8 | 7 | 6 | 5 | 4 | 3 | 2 | 1 |
| 1 to 2 | Type=21 (decimal) | | | | | | | |
| 3 to 4 | Length=n | | | | | | | |
| 5 | Spare | | | | | | V6 | V4 |
| 6 to 9 | UNI | | | | | | | |
| m to (m+3) | IPv4 address | | | | | | | |
| p to (p+15) | IPv6 address | | | | | | | |

When a value of BitV4 in the fifth octet of the Vxlan information IE is 1, it indicates that a Vxlan tunnel is over IPv4. In this case, an m^{th} to an (m+3)^{th} octets carry an IPv4 address for terminating the Vxlan tunnel by the CPF. When a value of BitV6 in the fifth octet of the Vxlan information IE is 1, it indicates that a Vxlan tunnel is over IPv6. In this case, a p^{th} to a (p+15)^{th} octets carry an IPv6 address for terminating the Vxlan tunnel by the CPF. The fifth bit to the eighth bit in the fifth octet of the Vxlan Information IE are alignment fields and are set to 0. Only one of BitV4 and BitV6 is set to 1.

The new type of IE is extended to carry the Vxlan tunnel information, so that a format of the IE in the PFCP message is reused to deliver the Vxlan tunnel information to the UPF, so that the solution implementation complexity and the configuration complexity are reduced.

This embodiment provides a PFCP-based method for preventing a CP device from being attacked in a scenario in which a BNG with CU disaggregated performs access authentication. On the basis of reducing load of the CPF and reducing a risk that the CPF is attacked, a session message in PFCP is reused to deliver information about a static user and an abnormal offline user, and a session processing model and a PDR mechanism are reused to execute a redirection policy, so that various communication mechanisms provided in PFCP are used to implement a solution of executing the security policy on the UPF. In this way, the solution of executing the security policy on the UPF is more smoothly integrated with the PFCP architecture, and the solution implementation complexity and the configuration complexity are reduced.

In the foregoing method 600, because the existing PFCP session message is reused, complexity of normal terminal access processing is increased. After the authentication succeeds, to deliver a session to the UPF, the CPF needs to check whether a user is a static user or an abnormal offline IPoE user. If the session belongs to a static user or an abnormal offline IPoE user, a message code is PFCP session modification. If the user is neither a static user nor an abnormal offline IPoE, a message code is PFCP session establishment. In addition, when performing offline processing, the CPF also needs to distinguish message codes when delivering a session to the UPF.

In view of this, it may be considered to separately extend a static session (Static-Session) message, so as to simplify normal service processing. For details, refer to the following method 700.

In the following method 700, a new message is extended by using the PCFP protocol, to transfer information exchanged between a CPF and a UPF. The extended message is, for example, a node message or a session message in PFCP. For example, refer to the following Table 23. In a type value range (for example, 58 to 99) of a session-level message reserved in PFCP, a new message type value is applied for, and the CPF uses a PFCP message of the new message type to deliver a static user table or an abnormal offline IPoE user table to the UPF.

**Table 23**

| Message type value (decimal) | Message |
|---|---|
| 58 | PFCP static session establishment request (PFCP Static-Session Install Request) |
| 59 | PFCP static session establishment response (PFCP Static-Session Install Response) |
| 60 | PFCP static session deletion request (PFCP Static-Session Remove Request) |
| 61 | PFCP static session deletion response (PFCP Static-Session Remove Response) |

In the foregoing Table 23, 58, 59, 60, and 61 are examples of extended new message types.

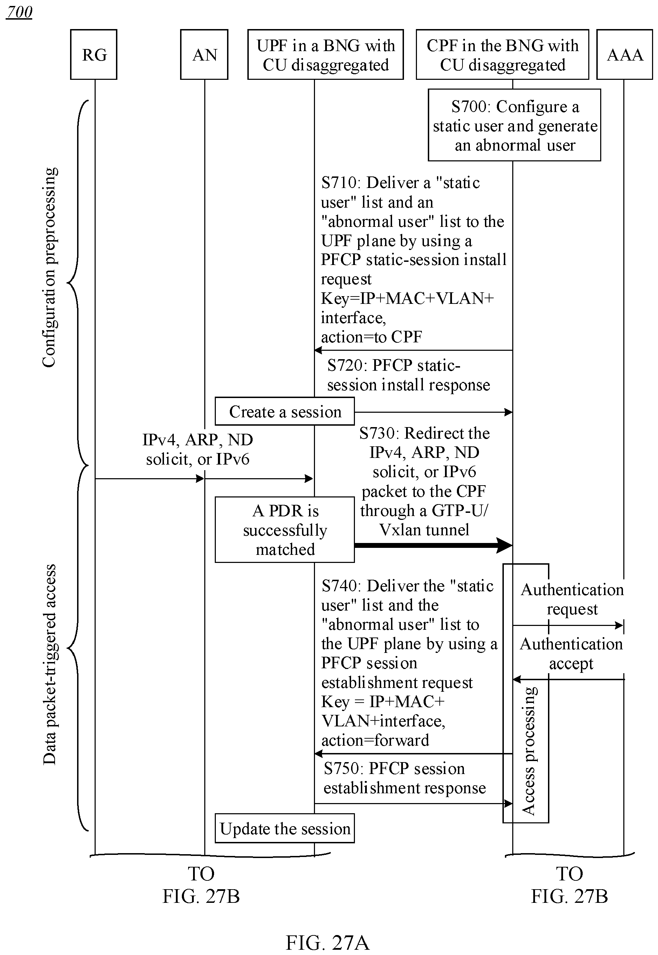

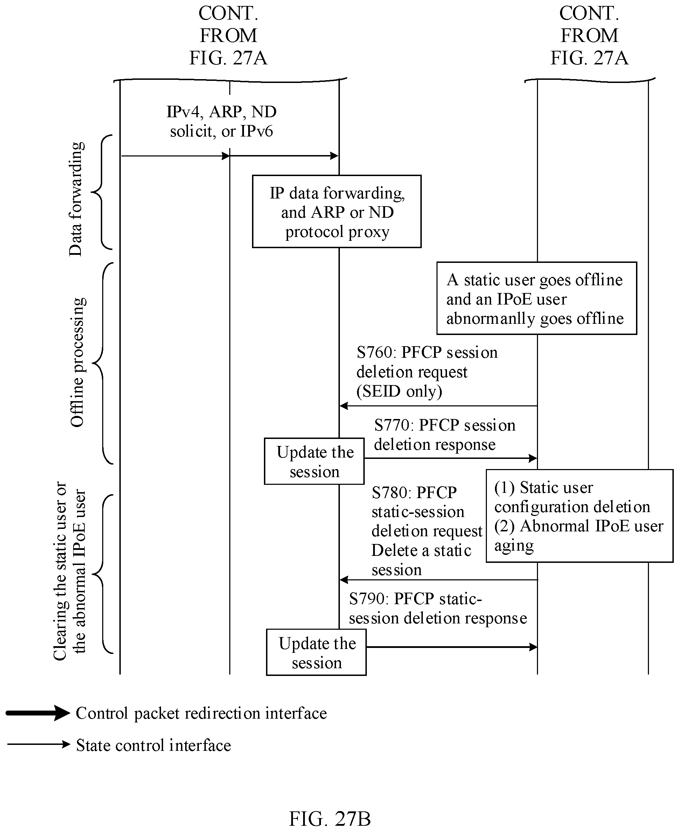

FIG. 27A and FIG. 27B are a flowchart of a packet processing method 700 according to an embodiment of this application. The method shown in FIG. 27A and FIG. 27B is about how to extend a new PFCP session message to deliver a static user table or an abnormal offline IPoE user table to a UPF. Optionally, each PFCP static session (PFCP Static-Session) corresponds to one configured static user. Each PFCP session corresponds to an online static user. In addition, a PFCP static session and a PFCP session use a same session ID (identifier). For example, the session IDs of the PFCP static session and the PFCP session are both 1. For example, a priority (Precedence) value carried in a PFCP static session establishment request is less than a priority value carried in a PFCP session establishment request. In this way, when matching a same flow, the UPF preferentially performs, based on the priority value, an action indicated by the PFCP session establishment request.

For example, the method 700 includes S700 to S790. The method 700 includes four phases. A phase 1 is a procedure before authentication succeeds, and the phase 1 includes S710 to S730. A phase 2 is a procedure in which the authentication succeeds. The phase 2 includes S740 and S750. A phase 3 is a procedure in which a terminal goes offline. The phase 3 includes S760 and S770. A phase 4 is a procedure of static user configuration deletion or abnormal IPoE user aging (to be specific, a user does not go online within a lease period). The phase 4 includes S780 and S790.

It should be understood that the method 700 focuses on a difference from the method 600. For similar steps in the method 700 and the method 600, refer to the method 600. Details are not described in the method 700.

The state control interface and the control packet redirection interface in PFCP are extended to transmit the signaling in the method 500. In other words, in the method 500, various packets exchanged between the CPF and the UPF are transmitted through the state control interface and the control packet redirection interface. For example, in the following method 700, a PFCP static session establishment request is delivered from the CPF to the UPF through the state control interface in S710, a PFCP static session establishment response is sent from the UPF to the CPF through the state control interface in S720, a packet that triggers access is sent from the UPF to the CPF through the control packet redirection interface in S730, a PFCP session establishment request is delivered from the CPF to the UPF through the state control interface in S740, a PFCP session establishment response is sent from the UPF to the CPF through the state control interface in S750, a PFCP session deletion request is delivered from the CPF to the UPF through the state control interface in S760, a PFCP session deletion response is sent from the UPF to the CPF through the state control interface in S770, the PFCP static session deletion request is delivered from the CPF to the UPF through the state control interface in S780, and a PFCP static session deletion response is sent from the UPF to the CPF through the state control interface in S790.

S700: Configure a static user table on the CPF; or the CPF generates an abnormal offline IPoE user table.

S710: The CPF sends the PFCP static session establishment request to the UPF.

Specifically, the CPF generates the PFCP static session establishment request, and sends the PFCP static session establishment request to the UPF, to indicate the UPF to create a session, so that the UPF redirects a packet to the CPF after matching an IP flow of the session.

The PFCP static session establishment request is a PFCP session message. A message type of the PFCP static session establishment request indicates to create a PFCP session for a first type of user. For example, refer to the foregoing Table 23. The type value of the message type of the PFCP static session establishment request is 58, where 58 is a session-level message type value reserved in PFCP, and 58 may be used to identify creation of a PFCP session of a static user. The PFCP static session establishment request carries a PDR, and the PDR is the first policy in the method 500. The PDR in the PFCP static session establishment request includes PDI and a PA. The PDI includes information about the first type of user, so that the UPF uses the information about the first type of user as a parameter for identifying a packet flow, and executes the first policy based on the information about the first type of user. The PDI includes an IPv4 address or an IPv6 address. Optionally, the PDI further includes a VLAN tag or an interface index corresponding to an access interface. The PA indicates to redirect to the CPF.

A PCFP message of a new message type is extended, and the CPF uses the PCFP message of the new message type to deliver information about a user having a fixed IP address and a redirection action to the UPF, so that after authentication succeeds, the CPF can use a PFCP session establishment request to deliver a session for the user having the fixed IP address and another user, so that complexity of processing normal terminal access by the CPF is reduced.

In some embodiments, the CPF includes a session ID of the session of the first type of user and a priority of the first type of user in the PFCP static session establishment request, and sends the PFCP static session establishment request to the UPF. The PFCP static session establishment request includes the session ID and the priority of the session of the first type of user. The UPF obtains the session ID and the priority of the session of the first type of user from the PFCP static session establishment request, and creates a session having the session ID and the priority. For example, if the PFCP static session establishment request includes ID=1 and priority=1, the UPF creates a session whose ID is 1 and priority is 1.

S720: The UPF receives the PFCP static session establishment request, generates the PFCP static session establishment response, and sends the PFCP static session establishment response to the CPF.

In addition, the UPF creates at least one PFCP session.

S730: The UP device receives the packet, and matches, based on the PDA, first information included in the packet with the information about the first type of user. If the first information and the information about the first type of user in the PDI satisfy a first matching condition, the UP device sends, based on the packet action PA corresponding to the PDI, the packet to a CP device included in a BNG.

Specifically, when receiving a packet, the UPF matches information such as a source IP address and an interface with a session (ID=1 and priority = 1) table. If the PDR is successfully matched, the UPF redirects the packet to the CPF through a GTP-U or Vxlan tunnel.

S740: The CPF completes authentication on a terminal, and the CPF generates the PFCP session establishment request, and sends the PFCP session establishment request to the UPF.

The PFCP session establishment request carries a PDR, and the PDR is the second policy in the method 500. Specifically, the PDR in the PFCP session establishment request includes PDI and a PA. The PDI includes a static user table and an abnormal user table. In a forwarding phase, the UPF extracts a parameter from the packet and matches the parameter in the packet with the static user table and the abnormal user table in the PDI. The parameter that is of the packet and that is used by the UPF includes an IPv4 address, an IPv6 address, a VLAN tag, and an interface index corresponding to an access interface. The PA indicates to forward the packet. The CPF sends the PFCP session establishment request to the UPF to deliver the static user table and the abnormal user table to the UPF. The PFCP session establishment request includes "Key=IP+MAC+VLAN+interface, action=forward". The CPF uses the PFCP session establishment request to indicate the UPF to perform forwarding after matching an IP flow of a session.

In some embodiments, the CPF includes a session ID of the session of the first type of user and a priority of the first type of user in the PFCP session establishment request, and sends the PFCP session establishment request to the UPF. The PFCP session establishment request includes the session ID and the priority of the session of the first type of user. The priority in the PFCP session establishment request is higher than that in the PFCP static session establishment request. The session ID in the PFCP session establishment request is the same as that in the PFCP static session establishment request. The UPF obtains the session ID and the priority of the session of the first type of user from the PFCP session establishment request, and creates a session having the session ID and the priority. For example, if the PFCP session establishment request includes ID=1 and priority=2, the UPF creates a session whose ID is 1 and priority is 2.

S750: The UPF receives the FCPF session establishment request, generates the PFCP session establishment response, and sends the PFCP session establishment response to the CPF. In addition, the UPF adds the session to a session table.

S760: When detecting an interface fault or a board fault of the UPF, the CPF performs offline processing on the terminal. The CPF generates the PFCP session deletion request and sends the PFCP session deletion request to the UPF.

S770: The UPF receives the PFCP session deletion request, generates the PFCP static session deletion response, and sends the PFCP session deletion response to the CPF.

In some embodiments, the PFCP session deletion request includes a session ID, to indicate the UPF to delete a PFCP session corresponding to the session ID. For example, the PFCP session deletion request includes ID=1, and the UPF deletes, based on the PFCP session deletion request, a PFCP session whose session ID is 1.

S780: When the CPF detects static user configuration deletion or abnormal IPoE user aging (where an IPoE user does not go online within a lease period), the CPF generates the PFCP static session deletion request, and sends the PFCP static session deletion request to the UPF.

The PFCP static session deletion request is a PFCP session message. A message type of the PFCP static session deletion request indicates to delete a PFCP session of the first type of user. For example, refer to the foregoing Table 23. The type value of the message type of the PFCP static session establishment request is 60, where 60 is a session-level message type value reserved in PFCP, and 60 may be used to identify deletion of an FCPF session of a static user.

S790: The UPF receives the PFCP static session deletion request, generates the PFCP static session deletion response, and sends the PFCP static session deletion response to the CPF. In addition, the UPF deletes the static session.

The following describes IEs carried in the PFCP static session establishment request in the method 700.

Table 24 shows meanings of identifiers used in a table including IEs in the method 700.

**Table 24**

| Classification of whether an IE appears in the method 700 | Descriptions |
|---|---|
| Mandatory (M) | Mandatory |
| Conditional (C) | The IE needs to be carried if a specific condition is satisfied . |
| Conditional-Optional (CO) | The IE may be carried if a specific condition is satisfied. |
| Optional (O) | Whether the IE is carried is optional. |

Table 25 describes several types of IEs in the method 700 by using examples.

**Table 25**

| IE | P | Condition/Comment | IE type |
|---|---|---|---|
| Node ID | M | Device number of the CPF | Node ID (existing IE) |
| CPF-SEID | M | Session ID allocated by the CPF, where the ID is unique. | F-SEID (existing IE) |
| Precedence | M | Priority of the rule. A larger value indicates a higher priority. | Priority |
| | | Note: Example values are as follows: | |
| | | (1) Set this parameter to 1 when a static session is created. | |
| | | (2) Set this parameter to 2 when a common session is created (where the value needs to be greater than that when a static session is created). | |
| Create PDR | M | Create packet detection rule | Create PDR (existing IE) |
| | | The definition is the same as that of the Create PDR in the method 600 | |
| Create FAR | M | Create forwarding rule | Create FAR (existing IE) |
| | | The definition is the same as that of the Create FAR in the method | |

| IE | P | Condition/Comment | IE type |
|---|---|---|---|
| | | 600 | |
| Create Traffic Endpoint | M | Data flow termination information, which identifies a piece of flow information. The definition is the same as that of the Create Traffic Endpoint in the method 600 | Create Traffic Endpoint (existing IE) |

Table 26 describes several types of IEs in the PFCP static session establishment response by using examples.

**Table 26**

| IE | P | Condition/Comment | IE type |
|---|---|---|---|
| Node ID | M | Device number of the UPF | Node ID |
| Cause | M | Processing result | Cause |

In addition, in the PFCP session deletion request message, the session ID in a message header is reused to indicate the UPF to delete the corresponding session. Table 27 lists IEs carried in the PFCP static session deletion response message.

**Table 27**

| IE | P | Condition/Comment | IE type |
|---|---|---|---|
| Node ID | M | Device number of the UPF | Node ID |
| Cause | M | Processing result | Cause |

In addition, an extended grouped IE and an embedded IE that are extended in the method 700 are the same as those in the method 600, and reference is further made to the foregoing method 600.

This embodiment provides a PFCP-based method for preventing a CP device from being attacked in a scenario in which a BNG with CU disaggregated performs access authentication. On the basis of reducing load of the CPF and reducing a risk that the CPF is attacked, a new type of session message is extended in PFCP to deliver information about a static user and an abnormal offline user, and a session processing model and a PDR mechanism are reused to execute a redirection policy, so that a solution of executing a security policy on the UPF can be more smoothly integrated with a PFCP architecture. This can further avoid a problem that CPF processing is complex because the CPF needs to distinguish a user having a fixed IP from another user when the CPF delivers a session to the UPF and the CPF performs offline processing after the authentication succeeds. Therefore, a normal service processing process of the CPF is simplified.

The PFCP session establishment request or the PFCP static session establishment request in the method 600 and the method 700 is an example of a PFCP message used when the CPF delivers the first policy. In some other embodiments, the CPF includes the first policy in a PFCP message other than the PFCP session establishment request or the PFCP static session establishment request, and delivers the first policy by sending the another PFCP message to the UPF. A type of the PFCP message used for delivering the first policy is not limited in this embodiment.

The PFCP session deletion request or the PFCP static session deletion request in the method 600 and the method 700 is an example of a PFCP message used when the CPF indicates the UPF to delete information about a user having a fixed IP address. In some other embodiments, the CPF includes the first policy in a PFCP message other than the PFCP session deletion request or the PFCP static session deletion request, and indicates, by sending the another PFCP message to the UPF, the UPF to delete the information about the user having the fixed IP address. A type of the PFCP message used to delete the information about the user having the fixed IP address is not limited in this embodiment.

Using PFCP to implement the method 500 described in the method 600 and the method 700 is an optional manner. In some other embodiments, a C/U communication protocol other than PFCP is used to implement the method 500. The C/U communication protocol may be referred to as the control plane separation (Control User Plane Separation, CUPS) interface protocol or the SCi protocol.

The foregoing describes the method 400, the method 500, the method 600, and the method 700 in embodiments of this application. The following describes a UP device and a CP device in embodiments of this application.

The UP device and the CP device described below each have any function of the UPF or the CPF in the method 400, the method 500, the method 600, and the method 700. The UP device described below corresponds to a UPF, and the CP device described below corresponds to a CPF.

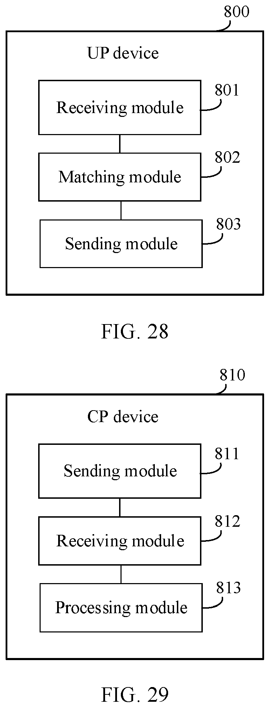

FIG. 28 is a schematic diagram of a structure of a UP device 800 according to an embodiment of this application. The UP device 800 is located in a communication system in which a UP and a CP are disaggregated. As shown in FIG. 28, the UP device 800 includes a receiving module 801, configured to receive a packet;
a matching module 802, configured to match first information included in the packet with information about a first type of user, where the first type of user has a fixed Internet Protocol IP address; and
a sending module 803, configured to send the packet to a control plane CP device if the first information and the information about the first type of user satisfy a first matching condition.

Optionally, the first type of user includes at least one of a static user or an abnormal offline user.

Optionally, the matching module 802 is further configured to match second information included in the packet with information about a second type of user, where the second type of user has been authenticated; and
the UP device further includes: a determining module, configured to determine that the second information and the information about the second type of user do not satisfy a second matching condition.

Optionally, the sending module 803 is configured to: if the first information and the information about the first type of user in packet detection information PDI satisfy the first matching condition, send, based on a packet action PA corresponding to the PDI, the packet to the CP device, where the PA indicates to redirect to the CP device.

Optionally, the receiving module 801 is further configured to receive a first policy from the CP device, where the first policy indicates to redirect the packet to the CP device when the first information included in the packet and the information about the first type of user satisfy the first matching condition.

Optionally, the receiving module 801 is configured to receive a first packet forwarding control protocol PFCP message from the CP device, where a packet detection rule PDR carried in the first PFCP message is the first policy, where the first PFCP message is a PFCP session establishment request; or the first PFCP message is a PFCP session message including a first message type, and the first message type indicates to create a PFCP session for the first type of user.

Optionally, the first PFCP message includes an interface index, the interface index identifies an access interface on the UP device, and the access interface is an interface accessed by a terminal of the first type of user.

Optionally, the interface index is carried in an IE having a first information element IE type, and the first IE type identifies that the IE includes the interface index.

Optionally, the sending module 803 is configured to: add a general packet radio service tunneling protocol-user plane GTP-U header to the packet, and send the packet to which the GTP-U header is added; or add a virtual extensible local area network Vxlan header to the packet, and send the packet to which the Vxlan header is added.

Optionally, the receiving module 801 is further configured to receive a redirection parameter from the CP device, where the redirection parameter includes at least one of GTP-U tunnel information or Vxlan tunnel information.

Optionally, the redirection parameter is carried in an IE having a second IE type, and the second IE type identifies that the IE includes the redirection parameter.

Optionally, the Vxlan tunnel information is carried in an IE having a third IE type, and the third IE type identifies that the IE includes the Vxlan tunnel information.

Optionally, the receiving module 801 is further configured to receive a deletion request from the CP device; and the UP device further includes: a deletion module, configured to delete the information about the first type of user in response to the deletion request.

Optionally, the deletion request is a second PFCP message, where
the second PFCP message is a PFCP session deletion request; or
the second PFCP message is a PFCP session message including a second message type, and the second message type indicates to delete a PFCP session of the first type of user.

Optionally, the UP device further includes: a discarding module, configured to discard the packet if the first information and the information about the first type of user do not satisfy the first matching condition.

It should be understood that the UP device 800 corresponds to the UPF (UP device) in the foregoing method embodiments, and modules in the UP device 800 and the foregoing other operations and/or functions are respectively for implementing the steps and the methods implemented by the UPF (UP device) in the method 400, the method 500, the method 600, and the method 700. For specific details, refer to the method 400, the method 500, the method 600, and the method 700. For brevity, details are not described herein again.

When the UP device 800 processes a packet, division of the foregoing functional modules is merely used as an example for description. In actual applications, the foregoing functions may be allocated to different functional modules for implementation based on a requirement. That is, an internal structure of the UP device 800 is divided into different functional modules, to implement all or some of the functions described above. In addition, the UP device 800 provided in the foregoing embodiment belongs to a same concept as the method 400, the method 500, the method 600, and the method 700. For a specific implementation process thereof, refer to the method 400, the method 500, the method 600, and the method 700. Details are not described herein again.

FIG. 29 is a schematic diagram of a structure of a CP device 810 according to an embodiment of this application. The CP device 810 is located in a communication system in which a CP and a UP are disaggregated. As shown in FIG. 29, the CP device 810 includes: a sending module 811, configured to send a first policy to a user plane UP device, where the first policy indicates to redirect a packet to the CP device when first information included in the packet and information about a first type of user satisfy a first matching condition, and the first type of user has a fixed Internet Protocol IP address;
a receiving module 812, configured to receive the packet from the UP device; and
a processing module 813, configured to perform access processing based on the packet.

Optionally, the first type of user includes at least one of a static user or an abnormal offline user, the static user is a user having a fixed IP address, and the abnormal offline user is a user who goes offline abnormally due to a fault in the communication system within a lease period of an IP address allocated by the communication system.

Optionally, the sending module 811 is configured to send a first packet forwarding control protocol PFCP message, where the first PFCP message carries the first policy, where the first PFCP message is a PFCP session establishment request; or the first PFCP message is a PFCP session message including a first message type, and the first message type indicates to create a PFCP session for the first type of user.

Optionally, a general packet radio service tunneling protocol-user plane GTP-U header or a virtual extensible local area network Vxlan header is added to the packet, and the sending module 811 is further configured to send a redirection parameter to the UP device, where the redirection parameter includes at least one of GTP-U tunnel information or Vxlan tunnel information.

Optionally, the CP device includes: a detection module, configured to detect that configuration information of the first type of user is deleted or a lease period of the first type of user expires, where
the sending module 811 is further configured to send a deletion request to the UP device, where the deletion request indicates to delete the information about the first type of user.

Optionally, the deletion request is a second PFCP message, where
the second PFCP message is a PFCP session deletion request; or
the second PFCP message is a PFCP session message including a second message type, and the second message type indicates to delete a PFCP session of the first type of user.

Optionally, the first PFCP message includes an interface index, the interface index identifies an access interface on the UP device, and the access interface is an interface accessed by a terminal of the first type of static user or an interface accessed by a terminal of the abnormal offline user.

Optionally, the interface index is carried in a group IE having a first information element IE type, and the first IE type identifies that the IE includes the interface index.

Optionally, the redirection parameter is carried in a group IE having a second IE type, and the second IE type identifies that the IE includes the redirection parameter.

Optionally, the Vxlan tunnel information is carried in an embedded IE having a third IE type, and the third IE type identifies that the IE includes the Vxlan tunnel information.

It should be understood that the CP device 810 corresponds to the CPF (CP device) in the foregoing method embodiments, and modules in the CP device 810 and the foregoing other operations and/or functions are respectively for implementing the steps and the methods implemented by the CPF (CP device) in the method 400, the method 500, the method 600, and the method 700. For specific details, refer to the method 400, the method 500, the method 600, and the method 700. For brevity, details are not described herein again.

When the CP device 810 processes a packet, division of the foregoing functional modules is merely used as an example for description. In actual applications, the foregoing functions may be allocated to different functional modules for implementation based on a requirement. That is, an internal structure of the CP device 810 is divided into different functional modules, to implement all or some of the functions described above. In addition, the CP device 810 provided in the foregoing embodiment belongs to a same concept as the method 400, the method 500, the method 600, and the method 700. For a specific implementation process thereof, refer to the method 400, the method 500, the method 600, and the method 700. Details are not described herein again.

The following describes a hardware structure of the UP device or the CP device.

The device 900 or the device 1000 described below is corresponding to the UPF (UP device) or the CPF (CP device) in the method 400, the method 500, the method 600, and the method 700. Hardware, modules, and the foregoing other operations and/or functions in the device 900 or the device 1000 are separately used to implement various steps and methods implemented by the UPF (UP device) or the CPF (CP device) in the method embodiments. For detailed procedures of how the device 900 or the device 1000 processes a packet, refer to the method 400, the method 500, the method 600, and the method 700. For brevity, details are not described herein again. The steps of the method 400, the method 500, the method 600, and the method 700 are implemented by using an integrated logic circuit of hardware in a processor, or by using instructions in a form of software in the device 900 or the device 1000. The steps of the methods disclosed with reference to embodiments of this application may be directly performed and completed by a hardware processor, or may be performed and completed by a combination of hardware and a software module in the processor. A software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware in the processor.

The device 900 corresponds to the UP device 800 or the CP device 810, and each functional module in the UP device 800 or the CP device 810 is implemented by using software of the device 900. In other words, the functional modules included in the UP device 800 or the CP device 810 are generated through reading, by a processor of the device 900, program code stored in a memory.

The device 1000 corresponds to the UP device 800, and each functional module in the UP device 800 is implemented by using software of the device 1000. In other words, the functional modules included in the UP device 800 are generated through reading, by a processor of the device 1000, program code stored in a memory.

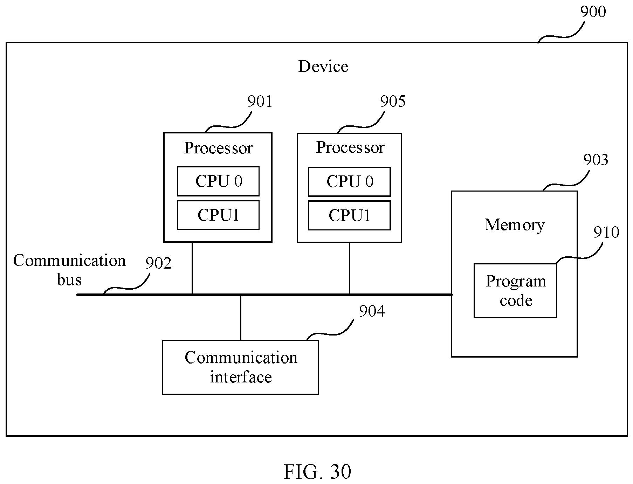

FIG. 30 is a schematic diagram of a structure of a device 900 according to an example embodiment of this application. Optionally, the device 900 is configured as a UPF (UP device) or a CPF (CP device). In other words, the UPF (UP device) or the CPF (CP device) in the method 400, the method 500, the method 600, and the method 700 is optionally implemented by using the device 900.

The device 900 is, for example, a network device. For example, the device 900 is a switch or a router. Alternatively, the device 900 is, for example, a computing device. For example, the device 900 is a host, a server, or a personal computer. The device 900 may be implemented by a general bus architecture.

The device 900 includes at least one processor 901, a communication bus 902, a memory 903, and at least one communication interface 904.

The processor 901 is, for example, a general-purpose central processing unit (central processing unit, CPU), a network processor (network processor, NP), a graphics processing unit (Graphics Processing Unit, GPU), a neural network processing unit (neural network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable logic gate array (field programmable gate array, FPGA), a generic array logic (generic array logic, GAL), or any combination thereof.

The communication bus 902 is configured to transfer information between the components. The communication bus 902 may be classified into an address bus, a data bus, a control bus, and the like. For ease of representation, only one thick line is for representing the bus in FIG. 30, but this does not mean that there is only one bus or only one type of bus.

The memory 903 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be used to carry or store expected program code in a form of instructions or a data structure and that can be accessed by a computer, but is not limited thereto. The memory 903, for example, exists independently, and is connected to the processor 901 by using the communication bus 902. Alternatively, the memory 903 may be integrated with the processor 901.

The communication interface 904 uses any apparatus such as a transceiver, and is configured to communicate with another device or a communication network. The communication interface 904 includes a wired communication interface, and may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 901 may include one or more CPUs, for example, a CPU 0 and a CPU 1 shown in FIG. 30.

During specific implementation, in an embodiment, the device 900 may include a plurality of processors, such as the processor 901 and a processor 905 in FIG. 30. Each of the processors may be a single-core (single-CPU) processor or may be a multi-core (multi-CPU) processor. The processor herein may refer to one or more devices, circuits, and/or processing cores configured to process data (such as computer program instructions).

During specific implementation, in an embodiment, the device 900 may further include an output device and an input device. The output device communicates with the processor 901, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 901, and may receive an input from a user in a plurality of manners. For example, the input device may be a mouse, a keyboard, a touchscreen device, or a sensor device.

In some embodiments, the memory 903 is configured to store program code 910 for performing the solutions in this application, and the processor 901 can execute the program code 910 stored in the memory 903. That is, the device 900 may implement the packet processing method provided in the method embodiments by using the processor 901 and the program code 910 in the memory 903.

The device 900 in this embodiment of this application may correspond to the UPF (UP device) or the CPF (CP device) in the foregoing method embodiments, and the processor 901, the communication interface 904, and the like in the device 900 may implement functions of the UPF (UP device) or the CPF (CP device) and/or various implemented steps and methods in the foregoing method embodiments. For brevity, details are not described herein.

When the UP device (UPF) is implemented using the device 900, in some embodiments, the receiving module 801 and the sending module 803 in the UP device 800 shown in FIG. 28 are equivalent to the communication interface 904 in the device 900. The matching module 802 in the UP device 800 may be equivalent to the processor 901 in the device 900.

When the CP device (CPF) is implemented using the device 900, in some embodiments, the sending module 811 and the receiving module 812 in the CP device 810 shown in FIG. 29 are equivalent to the communication interface 904 in the device 900. The processing module 813 in the CP device 810 may be equivalent to the processor 901 in the device 900.

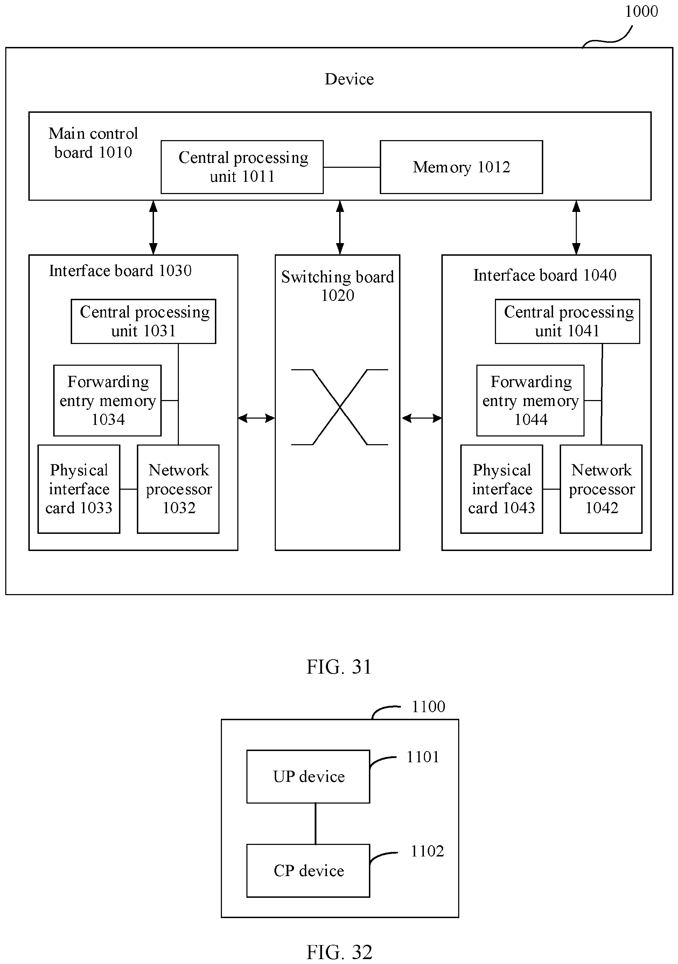

FIG. 31 is a schematic diagram of a structure of the device 1000 according to an example embodiment of this application. Optionally, the device 1000 is configured as a UPF (UP device). In other words, the UPF (UP device) in the method 400, the method 500, the method 600, and the method 700 is optionally implemented by using the device 1000.

The device 1000 is, for example, a network device. For example, the device 1000 is a switch or a router. The device 1000 includes a main control board 1010 and an interface board 1030.

The main control board is also referred to as a main processing unit (main processing unit, MPU) or a route processing card (route processor card). The main control board 1010 is configured to control and manage components in the device 1000, including functions of route computation, device management, device maintenance, and protocol processing. The main control board 1010 includes a central processing unit 1011 and a memory 1012.

The interface board 1030 is also referred to as a line interface unit card (line processing unit, LPU), a line card (line card), or a service board. The interface board 1030 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030 and communicate with the central processing unit 1011 on the main control board 1010.

The network processor 1032 is configured to forward and process a packet. A form of the network processor 1032 may be a forwarding chip. Specifically, the network processor 1032 is configured to forward a received packet based on a forwarding table stored in the forwarding table memory 1034. If a destination address of the packet is an address of the device 1000, the network processor 1032 sends the packet to a CPU (for example, a central processing unit 1011) for processing. If a destination address of the packet is not an address of the device 1000, the network processor 1032 searches for, based on the destination address, a next hop and an outbound interface corresponding to the destination address in the forwarding table, and forwards the packet to the outbound interface corresponding to the destination address. An uplink packet is processed as follows: An incoming interface on the packet is processed, and the forwarding table is searched. A downlink packet is processed as follows: The forwarding table is searched.

The physical interface card 1033 is configured to implement a physical-layer interconnection function. Original traffic enters the interface board 1030 from the physical interface card 1033, and a processed packet is sent from the physical interface card 1033. The physical interface card 1033 is also referred to as a subcard and may be installed on the interface board 1030, and is responsible for converting an optoelectronic signal into a packet, performing validity check on the packet, and then forwarding the packet to the network processor 1032 for processing. In some embodiments, the central processing unit may alternatively perform a function of the network processor 1032, for example, implement software forwarding based on a general CPU. Therefore, the network processor 1032 is not necessary in the physical interface card 1033.

Optionally, the device 1000 includes a plurality of interface boards. For example, the device 1000 further includes an interface board 1040, and the interface board 1040 includes a central processing unit 1041, a network processor 1042, a forwarding entry memory 1044, and a physical interface card 1043.

Optionally, the device 1000 further includes a switching board 1020. The switching board 1020 may also be referred to as a switch fabric unit (switch fabric unit, SFU). When the network device has a plurality of interface boards 1030, the switching board 1020 is configured to complete data exchange between the interface boards. For example, the interface board 1030 and the interface board 1040 may communicate with each other by using the switching board 1020.

The main control board 1010 is coupled to the interface board 1030. For example, the main control board 1010, the interface board 1030 and the interface board 1040, and the switching board 1020 are connected to a system backboard through a system bus for interworking. In a possible implementation, an inter-process communication (inter-process communication, IPC) channel is established between the main control board 1010 and the interface board 1030, and the main control board 1010 and the interface board 1030 communicate with each other through the IPC channel.

Logically, the device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs the following functions: a router, generating a forwarding table, processing signaling and a protocol packet, configuring and maintaining a device status, and the like. The control plane delivers the generated forwarding table to the forwarding plane. On the forwarding plane, the network processor 1032 searches the forwarding table delivered by the control plane, and then forwards, based on the table, a packet received by the physical interface card 1033. The forwarding table delivered by the control plane may be stored in the forwarding entry memory 1034. In some embodiments, the control plane and the forwarding plane may be totally disaggregated, and are not on a same device.

The following briefly describes the method 400, the method 500, the method 600, and the method 700 with reference to the device 1000.

The UP device receives a packet by using the physical interface card 1033, determines that a destination IP address of the packet is an address of the device 1000, and sends the packet to the central processing unit 1031 for processing. The central processing unit 1031 accesses the forwarding entry memory 1034 to obtain information about a first type of user stored in the forwarding entry memory 1034. The central processing unit 1031 matches first information included in the packet with the information about the first type of user. The central processing unit 1031 determines that the first information and the information about the first type of user satisfy a first matching condition, and the physical interface card 1033 sends the packet to the CP device.

When the UP device (UPF) is implemented using the device 1000, in some embodiments, the receiving module 801 and the sending module 803 in the UP device 800 shown in FIG. 28 are equivalent to the physical interface card 1033 in the device 1000. The matching module 802 in the UP device 800 is equivalent to the network processor 1032, the central processing unit 1031, or the central processing unit 1011.

It should be understood that in this embodiment of this application, an operation on the interface board 1040 is the same as an operation on the interface board 1030. For brevity, details are not described again. It should be understood that, the device 1000 in this embodiment may correspond to the UP device (UPF) in the foregoing method embodiments, and the main control board 1010, the interface board 1030, and/or the interface board 1040 in the device 1000 may implement functions of the UP device (UPF) in the foregoing method embodiments and/or various steps implemented by the UP device (UPF) in the foregoing method embodiments. For brevity, details are not described herein again.

It should be noted that, there may be one or more main control boards. When there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load balancing and redundancy backup may be implemented together In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a relatively weak data exchange and processing capability. A specific architecture that is to be used depends on a specific networking deployment scenario. This is not limited herein.

Refer to FIG. 32. An embodiment of this application provides a communication system 1100. The communication system 1100 includes a UP device 1101 and a CP device 1102. Optionally, the UP device 1101 is the UP device 800 shown in FIG. 28, the device 900 shown in FIG. 30, or the device 1000 shown in FIG. 31. The CP device is the CP device 810 shown in FIG. 29 or the device 900 shown in FIG. 30.

A person of ordinary skill in the art may be aware that, in combination with the examples described in embodiments disclosed in this specification, method steps and modules can be implemented by electronic hardware, computer software, or a combination thereof. To clearly describe the interchangeability between the hardware and the software, the foregoing has generally described steps and composition of each embodiment according to functions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and module, refer to a corresponding process in the foregoing method embodiment, and details are not described herein.

In the several embodiments provided in this application, it should be understood that the disclosed system, device, and method may be implemented in other manners. For example, the described device embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one location, or may be distributed on a plurality of network modules. Some or all of the modules may be selected according to actual needs to achieve the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In embodiments of this application, terms such as "first" and "second" are used to distinguish same items or similar items that have basically same functions. It should be understood that there is no logical or time sequence dependency between "first" and "second", and a quantity and an execution sequence are not limited. It should also be understood that although terms such as first and second are used in the following description to describe various elements, these elements should not be limited by the terms. These terms are merely used to distinguish one element from another element. For example, first information may be referred to as second information, and similarly, second information may be referred to as first information without departing from the scope of the various examples. Both the first information and the second information may be information, and in some cases may be separate and different information.

In this application, "at least one" means one or more and "a plurality of" means two or more. Terms "system" and "network" may be used interchangeably in this specification.

It should be further understood that the term "if" may be interpreted as a meaning "when" ("when" or "upon"), "in response to determining", or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer program instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the spirit and principle of this application shall fall within the protection scope of this application.

## Claims

1. A packet processing method, applied to a UP device comprised in a communication system in which a control plane CP and a user plane UP are disaggregated, wherein the method comprises:
receiving, by the UP device, a packet;
matching, by the UP device, first information comprised in the packet with information about a first type of user, wherein the first type of user has a fixed Internet Protocol IP address; and
sending, by the UP device, the packet to a CP device comprised in the communication system if the first information and the information about the first type of user satisfy a first matching condition.

2. The method according to claim 1, wherein the first type of user comprises at least one of a static user or an abnormal offline user.

3. The method according to claim 1, wherein before the matching, by the UP device, first information comprised in the packet with information about a first type of user, the method further comprises:
matching, by the UP device, second information comprised in the packet with information about a second type of user, wherein the second type of user has been authenticated; and
determining, by the UP device, that the second information and the information about the second type of user do not satisfy a second matching condition.

4. The method according to claim 1, wherein the sending, by the UP device, the packet to a CP device comprised in the communication system if the first information and the information about the first type of user satisfy a first matching condition comprises:
if the first information and the information about the first type of user in packet detection information PDI satisfy the first matching condition, sending, by the UP device based on a packet action PA corresponding to the PDI, the packet to the CP device comprised in the communication system, wherein the PA indicates to redirect to the CP device.

5. The method according to claim 1, wherein before the receiving, by the UP device, a packet, the method further comprises:
receiving, by the UP device, a first policy from the CP device, wherein the first policy indicates to redirect the packet to the CP device when the first information comprised in the packet and the information about the first type of user satisfy the first matching condition.

6. The method according to claim 5, wherein the receiving, by the UP device, a first policy from the CP device comprises:
receiving, by the UP device, a first packet forwarding control protocol PFCP message from the CP device, wherein a packet detection rule PDR carried in the first PFCP message is the first policy, wherein
the first PFCP message is a PFCP session establishment request; or the first PFCP message is a PFCP session message comprising a first message type, and the first message type indicates to create a PFCP session for the first type of user.

7. The method according to claim 6, wherein the first PFCP message comprises an interface index, the interface index identifies an access interface on the UP device, and the access interface is an interface accessed by a terminal of the first type of user.

8. The method according to claim 7, wherein the interface index is carried in an IE having a first information element IE type, and the first IE type identifies that the IE comprises the interface index.

9. The method according to claim 1, wherein the sending, by the UP device, the packet to a CP device comprised in the communication system comprises:
adding, by the UP device, a general packet radio service tunneling protocol-user plane GTP-U header to the packet, and sending the packet to which the GTP-U header is added; or
adding, by the UP device, a virtual extensible local area network Vxlan header to the packet, and sending the packet to which the Vxlan header is added.

10. The method according to claim 9, wherein before the receiving, by the UP device, a packet, the method further comprises:
receiving, by the UP device, a redirection parameter from the CP device, wherein the redirection parameter comprises at least one of GTP-U tunnel information or Vxlan tunnel information.

11. The method according to claim 10, wherein the redirection parameter is carried in an IE having a second IE type, and the second IE type identifies that the IE comprises the redirection parameter.

12. The method according to claim 11, wherein the Vxlan tunnel information is carried in an IE having a third IE type, and the third IE type identifies that the IE comprises the Vxlan tunnel information.

13. The method according to claim 1, wherein after the sending, by the UP device, the packet to a CP device comprised in the communication system, the method further comprises:
receiving, by the UP device, a deletion request from the CP device; and
deleting, by the UP device, the information about the first type of user in response to the deletion request.

14. The method according to claim 13, wherein the deletion request is a second PFCP message, wherein
the second PFCP message is a PFCP session deletion request; or the second PFCP message is a PFCP session message comprising a second message type, and the second message type indicates to delete a PFCP session of the first type of user.

15. The method according to claim 1, wherein after the matching, by the UP device, first information comprised in the packet with information about a first type of user, the method further comprises:
discarding, by the UP device, the packet if the first information and the information about the first type of user do not satisfy the first matching condition.

16. A packet processing method, applied to a CP device comprised in a communication system in which a control plane CP and a user plane UP are disaggregated, wherein the method comprises:
sending, by the CP device, a first policy to a user plane UP device comprised in the communication system, wherein the first policy indicates to redirect a packet to the CP device when first information comprised in the packet and information about a first type of user satisfy a first matching condition, and the first type of user has a fixed Internet Protocol IP address;
receiving, by the CP device, the packet from the UP device; and
performing, by the CP device, access processing based on the packet.

17. The method according to claim 16, wherein the first type of user comprises at least one of a static user or an abnormal offline user, the static user is a user having a fixed IP address, and the abnormal offline user is a user who goes offline abnormally due to a fault in the communication system within a lease period of an IP address allocated by the communication system.

18. The method according to claim 16, wherein the sending a first policy comprises:
sending a first packet forwarding control protocol PFCP message, wherein the first PFCP message carries the first policy, wherein
the first PFCP message is a PFCP session establishment request; or the first PFCP message is a PFCP session message comprising a first message type, and the first message type indicates to create a PFCP session for the first type of user.

19. The method according to claim 16, wherein a general packet radio service tunneling protocol-user plane GTP-U header or a virtual extensible local area network Vxlan header is added to the packet, and before the receiving, by the CP device, the packet from the UP device, the method further comprises:
sending, by the CP device, a redirection parameter to the UP device, wherein the redirection parameter comprises at least one of GTP-U tunnel information or Vxlan tunnel information.

20. The method according to claim 16, wherein after the performing, by the CP device, access processing based on the packet, the method comprises:
detecting, by the CP device, that configuration information of the first type of user is deleted or a lease period of the first type of user expires; and
sending, by the CP device, a deletion request to the UP device, wherein the deletion request indicates to delete the information about the first type of user.

21. The method according to claim 20, wherein the deletion request is a second PFCP message, wherein
the second PFCP message is a PFCP session deletion request; or the second PFCP message is a PFCP session message comprising a second message type, and the second message type indicates to delete a PFCP session of the first type of user.

22. A user plane UP device, wherein the UP device is located in a communication system in which a UP and a control plane CP are disaggregated, and the UP device comprises:
a receiving module, configured to receive a packet;
a matching module, configured to match first information comprised in the packet with information about a first type of user, wherein the first type of user has a fixed Internet Protocol IP address; and
a sending module, configured to send the packet to a control plane CP device if the first information and the information about the first type of user satisfy a first matching condition.

23. A control plane CP device, wherein the CP device is located in a communication system in which a CP and a user plane UP are disaggregated, and the CP device comprises:
a sending module, configured to send a first policy to a user plane UP device, wherein the first policy indicates to redirect a packet to the CP device when first information comprised in the packet and information about a first type of user satisfy a first matching condition, and the first type of user has a fixed Internet Protocol IP address;
a receiving module, configured to receive the packet from the UP device; and
a processing module, configured to perform access processing based on the packet.

24. A communication system, wherein the communication system comprises the UP device according to claim 22 and the CP device according to claim 23.

25. A computer-readable storage medium, wherein the storage medium stores at least one instruction, and the instruction is read by a processor, to enable a user plane UP device to perform the method according to any one of claims 1 to 15.

26. A computer-readable storage medium, wherein the storage medium stores at least one instruction, and the instruction is read by a processor, to enable a control plane CP device to perform the method according to any one of claims 16 to 21.
